(19) Europäisches Patentamt
European Patent Office
Office européen des brevets

(11) **EP 3 220 065 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(51) Int Cl.:
*F24D 19/10* *(2006.01)*   *G05D 23/19* *(2006.01)*

(21) Anmeldenummer: **17158621.7**

(22) Anmeldetag: **01.03.2017**

(54) **VERFAHREN UND STEUEREINRICHTUNG ZUR ERHÖHUNG DES NUTZUNGSGRADS EINES WÄRMEERZEUGERS IN EINER HEIZUNGSANLAGE**

METHOD AND CONTROL DEVICE FOR INCREASING THE PERFORMANCE RATIO OF A HEAT GENERATOR IN A HEATING INSTALLATION

MÉTHODE ET APPAREIL DE CONTRÔLE POUR AUGMENTER LE TAUX DE PERFORMANCE D'UN GÉNÉRATEUR DE CHALEUR DANS UNE INSTALLATION DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2016 DE 102016104667**

(43) Veröffentlichungstag der Anmeldung:
**20.09.2017 Patentblatt 2017/38**

(73) Patentinhaber: **Techem Energy Services GmbH 65760 Eschborn (DE)**

(72) Erfinder: **Kähler, Arne 61350 Bad Homburg (DE)**

(74) Vertreter: **Keil & Schaafhausen Patent- und Rechtsanwälte PartGmbB Friedrichstraße 2-6 60323 Frankfurt am Main (DE)**

(56) Entgegenhaltungen:
**EP-A2- 1 108 962      EP-A2- 2 182 297
EP-B1- 1 933 220      DE-A1-102010 022 763
DE-U1-202014 103 748**

EP 3 220 065 B1

**Beschreibung**

Das erfindungsgemäße Verfahren und die erfindungsgemäße Steuereinrichtung zur Erhöhung des Nutzungsgrads eines Wärmeerzeugers in einer Heizungsanlage betreffen insbesondere Warmwasser-Heizungsanlagen, in denen die zentrale Heizungsversorgung mittels Wärmeerzeuger erfolgt. Grundsätzlich funktioniert das beschriebene Verfahren auch bei einer Kühlung entsprechend, wobei der Fachmann die Wirkrichtung des Prozesses von der Heizung auf die Kühlung entsprechend umkehren und die beschriebenen Abfragen und Schwellwerte entsprechend anpassen muss.

Der Wärmeerzeuger kann eine Einrichtung aufweisen, die Endenergie verbraucht und daraus Wärme erzeugt, die zur Erwärmung des Wärmeträgermediums genutzt wird. Typischer Weise kann der Wärmeerzeuger ein bspw. mit Gas oder Öl als eingesetzte Endenergie betriebener Brenner sein, bspw. ein üblicher Brennwertkessel oder herkömmlicher Brenner eines Heizkessels. Grundsätzlich kann der Wärmeerzeuger auch ein elektrischer Erhitzer sein, in dem Strom bspw. über eine Heizpatrone oder dergleichen in Wärme verwandelt wird. Ein anderes Beispiel für einen elektrisch betriebenen Wärmeerzeuger kann auch eine Wärmepumpe sein, die über einem thermodynamischen Kreisprozess einem Medium Wärme entzieht und einem anderen Medium zuführt. In diesem Sinne kann der Wärmeerzeuger also auch ein Wärmeübertrager sein.

Der Wärmeerzeuger erzeugt aus oder mittels Endenergie Wärme, die an einen Rohrkreislauf übergeben wird. Der Rohrkreislauf kann insbesondere aus einem Vorlauf und Rücklauf der Heizungsanlage bestehen, in dem ein Wärmeübertragungsmedium zirkuliert. Die Erfassung der Verbräuche an Brennstoff bzw. Endenergie, bspw. Elektroenergie bei einer Wärmepumpe, vor dem Wärmeerzeuger und der Wärme nach dem Wärmeerzeuger erfolgt mit geeigneten Erfassungssystemen, wie Brennstoffverbrauchserfassungssystemen (wie bspw. Ölstandsanzeigen) oder Zählern (wie bspw. Gas-, Wärme-, Elektrozählern). Moderne Erfassungssysteme sind häufig mit Kommunikationsmodulen zur Übertragung der aktuellen Verbräuche und ggf. weiterer Größen, wie Temperaturen, Durchflüssen oder sonstigen erfassten Größen, ausgestattet. Darüber hinaus sind die heizungstechnischen Anlagen, und hier speziell die im Raum befindlichen freien Heizflächen, mit kommunikationsfähigen, vorzugsweise funkgestützten, elektronischen Heizkostenverteilern ausgestattet.

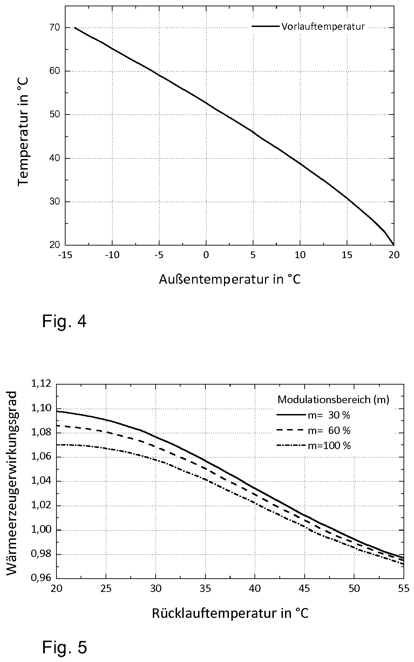

Wärmeerzeuger heizungstechnischer Anlagen im Gebäude werden derzeit meist mit einer konstanten Vorlauftemperatur $\vartheta_V$ oder mit einer nach der Außentemperatur durch eine vordefinierte Heizkurve gesteuerten Vorlauftemperatur $\vartheta_V^{Heizkruve}$ betrieben, wie sie beispielhaft in Fig. 4 dargestellt ist. Entsprechend dem Heizbedarf steigt die Vorlauftemperatur $\vartheta_V$ mit sinkender Außentemperatur $\vartheta_A$, wobei der genaue Verlauf der Heizkurve an die Heizungsanlage angepasst werden kann. Darüber hinaus existieren unterschiedliche Konzepte zur Einstellung des Differenzdrucks der Heizkreispumpe, die auch als Heizungsumwälzpumpe bezeichnet wird. Diese Begriffe werden in dieser Beschreibung synonym verwendet. Der Differenzdruck bezeichnet den Druckunterschied in einem Rohrkreislauf vor und hinter der Heizkreispumpe. Dieser Druckunterschied in dem Rohrkreislauf vor und hinter der Heizkreispumpe wird anschaulich durch die Förderhöhe der Heizkreispumpe beschrieben. Die Förderhöhe entspricht der durch den Differenzdruck erzeugten Arbeit der Pumpe auf das geförderte Medium (d.h. hier das Wärmeübertragungsmedium), welche sich als Höhe der durch die Pumpe geförderten Flüssigkeitssäule beschreiben lässt. Grundsätzlich könnte man im Rahmen dieses Textes anstelle des Begriffs "Differenzdruck" daher auch den Begriff "Förderhöhe" verwenden.

Auch der in dem Heizkreis eingestellte Differenzdruck der Heizkreispumpe, d.h. deren Förderhöhe, ist ein Maß für die dem Heizkreis zur Verfügung gestellte Wärmemenge. Beispielhafte Einstellungen für den Differenzdruck der Heizkreispumpe können sein: Einstellung der Werte für die Pumpendrehzahl oder der Förderhöhe oder des Volumenstromes. In modernen Heizungspumpen sind diese Werte über elektrische Schnittstellen bzw. über Bus-Schnittstellen von außen einstellbar. Durch Einstellung dieser Werte ist eine Variation der dem Gebäude bzw. Heizkreis zur Verfügung gestellte Wärmemenge möglich.

Alternativ zu einer durch eine Heizkurve fest vorgegebenen Vorlauftemperatur $\vartheta_V^{Heizkruve}$ existieren Konzepte, bei denen die Vorlauftemperatur $\vartheta_V$ des Wärmeerzeugers mit Bezug auf eine maximale Vorlauftemperatur $\vartheta_V^{Heizkruve}$ aus der Heizkurve mit dem Ergebnis adaptiert wird, dass die Vorlauftemperatur $\vartheta_V$ abgesenkt wird. Hierzu gibt es unterschiedliche Verfahren, die in Regelungen mit freier (unbegrenzter) und Regelungen mit begrenzter Adaption einzuteilen sind. Speziell die Verfahren mit freier Adaption sind häufig unmittelbar an eine Raumtemperaturregeleinrichtung gekoppelt und besitzen somit einen Informationsverbund zwischen Raum und Wärmeerzeuger. Entsprechende Konzepte lassen sich durch Variation des Differenzdrucks *(dp)* der Heizkreispumpe erreichen.

Die genannten Verfahren fokussieren auf eine bedarfsgerechte Heizwärmeversorgung der Räume eines Gebäudes mit dem Ziel, die Vorlauftemperatur $\vartheta_V$ oder den Differenzdruck *dp* in dem Gebäude bedarfsgerecht und dabei möglichst niedrig einzustellen. Damit soll der Verbrauch und folglich der Endenergieeinsatz für die Raumheizung reduziert werden.

Der entscheidende Nachteil dieser technischen Lösung besteht darin, dass zwar der Energieeinsatz reduziert wird, jedoch im Hinblick auf den Wärmeerzeuger bei einer starken Absenkung der Vorlauftemperatur oder des Differenzdrucks $dp$ die Rücklauftemperatur in der Regel ansteigt, was zu einer Verschlechterung des energetischen Wirkungsgrades und daraus resultierend des Nutzungsgrades des Wärmeerzeugers führt.

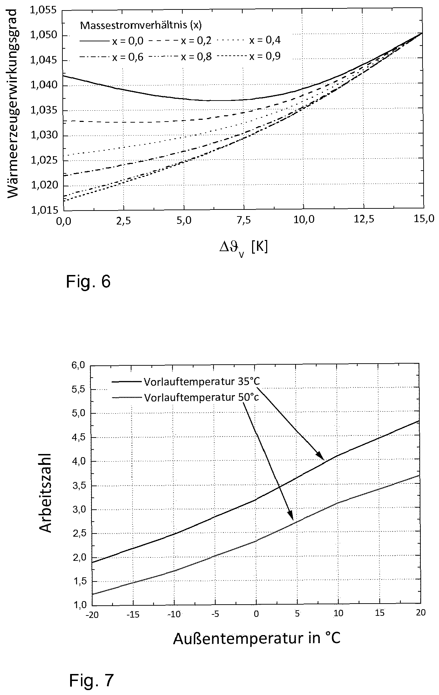

Das Optimum in Hinblick auf den Nutzungsgrad des Wärmeerzeugers kann jedoch nur realisiert werden, wenn niedrige Rücklauftemperaturen und möglichst geringe Vorlauftemperaturen oder Differenzdrücke ($dp$) vorliegen. Für eine beliebige Auswahl von Wärmeerzeugern sind signifikante Kennlinien den Fig. 5, 6 und 7 zu entnehmen. Fig. 5 zeigt den Wärmeerzeugerwirkungsgrad eines Brennwertkessels in Abhängigkeit der Rücklauftemperatur und des Modulationsbereiches (Brennerbelastung) und Fig. 6 zeigt den Wärmeerzeugerwirkungsgrad eines Brennwertkessels in Abhängigkeit der Vorlauftemperaturabsenkung und des Massestroms für eine Anlage mit Überströmventil. Unter dem Modulationsbereich, für den in Fig. 5 verschiedene Kurven dargestellt sind, versteht man die Anpassung der Brennerleistung des Gerätes auf die aktuell benötigte Leistung. Dies verringert die Taktfrequenz des Brennwertkessels deutlich. Typische Werte des unteren Modulationsbereiches sind 15 bis 30 %. Fig. 7 zeigt die Arbeitszahl einer Wärmepumpe in Abhängigkeit der Vorlauftemperatur, wobei hohe Arbeitszahlen einen hohen Wirkungsgrad bedeuten. Mit steigender Vorlauftemperatur werden deutlich geringere Arbeitszahlen erreicht. Auf der anderen Seite ist aus Fig. 7 deutlich der Einfluss der Außentemperatur zuerkennen. Mit steigender Außentemperatur steigen die Arbeitszahlen deutlich an. Einschränkend muss jedoch genannt werden, dass die Grafik typisch für das Verhalten einer Luft-Wasser- Wärmepumpe ist, die eine starke Abhängigkeit von der Außentemperatur aufweist. Für die Abhängigkeit von dem Differenzdruck $dp$ gelten entsprechende Kurven, weil durch eine Verringerung des Differenzdrucks $dp$ das Wärmeangebot in vergleichbarer Weise beeinflusst wird wie bei einer Verringerung der Vorlauftemperatur. Auf die Darstellung der entsprechenden Kurven kann daher verzichtet werden.

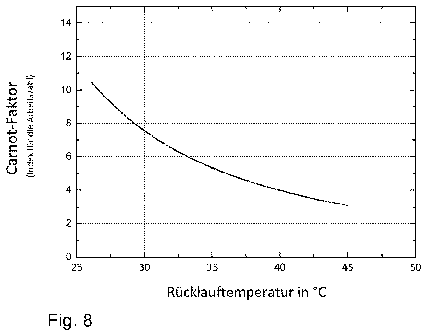

Nahezu gleiche Verläufe weist eine Grafik auf, die in Abhängigkeit der Rücklauftemperatur aufgezeichnet ist, da die Anlage bei Wärmepumpen mit einer konstanten Spreizung über dem Wärmeerzeuger betrieben wird. Unabhängig von der Art der Wärmequelle ist daher in Fig. 8 der Carnot-Faktor für einen Wärmepumpenprozess dokumentiert. Der Carnot-Faktor ist eine Bewertung des Kreisprozesses und beschreibt die Umwandlung von thermischer Energie in mechanische Energie (Arbeit). Das erstellte Diagramm basiert auf einer angenommenen Spreizung an den Wärmeübertragern von $\Delta\vartheta = 15\,K$. Der Carnot-Faktor beschreibt entsprechend den höchsten theoretisch möglichen Wirkungsgrad bei der Wärmeerzeugung bzw. des Kreisprozesses. Wie man erkennt, führen niedrige Rücklauftemperaturen zu einer signifikanten Verbesserung der Energieeffizienz. Daher ist zur Verbesserung des Wirkungs- oder Nutzungsgrades von Wärmeerzeugern eine niedrige Rücklauftemperatur anzustreben, was in der Regel mit steigenden Vorlauftemperaturen oder mit einem reduzierten Differenzdruck $dp$ einhergeht. Bei Brennwertkesseln als Wärmeerzeugern ist dieser Zusammenhang besonders ausgeprägt.

Entgegen der theoretischen Erwartung wird in der Praxis mitunter beobachtet, dass keine Absenkung der zentralen Rücklauftemperatur bei Anhebung der Vorlauftemperatur zu verzeichnen ist, da hier eine gewisse Kompensation aufgrund der Überdimensionierung der Heizungsanlage erfolgt. Um auch für diese Fälle eine Steigerung des Nutzungsgrades realisieren zu können, muss die Vorlauftemperatur abgesenkt werden. Auch in diesem Fall kann alternativ der Differenzdruck $dp$ der Heizkreispumpe angepasst werden.

Aus der DE 20 2014 103 748 U1 und der EP 1 108 962 A2 sind jeweils ein Verfahren nach dem Obergriff des Anspruchs 1 bekannt.

Aufgabe der vorliegenden Erfindung ist es, ein Verfahren zur Steigerung des Nutzungsgrads von Wärmeerzeugern vorzuschlagen, das in der Praxis unabhängig davon einsetzbar ist, ob bei sinkendem Differenzdruck $dp$ der Heizkreispumpe eine steigende oder eine fallende Rücklauftemperatur auftritt und das mit üblichen, in der Heizkostenerfassung und/oder der Heizungsregelung gemessenen oder dort zur Verfügung stehenden Messgrößen umgesetzt werden kann. Gleichzeitig mit der Erhöhung des Nutzungsgrads sollen natürlich auch die geforderten wärmephysiologischen Verhältnisse innerhalb der beheizten Räume eingehalten werden (thermische Behaglichkeit). Insbesondere sollen von den Nutzern als nicht ausreichend beheizt angesehene Räume vermieden werden.

Diese Aufgabe wird durch ein Verfahren mit den Merkmalen des Anspruchs 1 und eine Steuereinrichtung mit den Merkmalen des Anspruchs 10 gelöst.

Im Rahmen des durchgeführten Verfahrens sind insbesondere die folgenden Verfahrensschritte vorgesehen, die nacheinander durchgeführt werden können:

(a) Messen der Rücklauftemperatur $\vartheta_R$ sowie ggf. der Vorlauftemperatur $\vartheta_V$ (insbesondere für die nachfolgend beschriebene Bestimmung des Versorgungszustandswerts GVZ) und des Wärmeträger- bzw. Heizmediums, vorzugsweise im Vorlauf und Rücklauf der Heizungslage, bspw. im Anschlussbereich an den Wärmeerzeuger oder an anderen Positionen im Rohrkreislauf, und des Differenzdrucks $dp$ der Heizkreispumpe in der Heizungsanlage. Das Messen der Temperaturen kann einfach mittels ggf. an dem Vorlauf und an dem Rücklauf angebrachter und bspw. mit der Steuereinrichtung verbundener Temperatursensoren erfolgen. Es können aber auch andere Sensoreinheiten verwendet werden, die im Rohrkreislauf angeordnet sind und diese Temperaturen messen bzw. Rückschlüsse auf diese Temperaturen zulassen, so dass diese ermittelt werden können. Dies hat den Vorteil, dass das Verfahren auch mit in einer Heizungsanlage bestehenden Sensoreinheiten einfach realisiert werden kann. Das Messen des Differenzdrucks kann über bspw. in der Pumpe mit eingebaute oder extern angebrachte Differenzdrucksensoren oder durch Ableiten aus anderen Parametern der Pumpe erfolgen, die aufgrund bekannter Pumpeneigenschaften einen Rückschluss auf den Differenzdruck zulassen. Dies können auch bspw. über eine Schnittstelle an der Pumpe abrufbare Daten sein, wie Pumpendrehzahl, Förderhöhe und/oder Volumenstrom. Die Schnittstelle kann eine Bus-Schnittstelle oder eine elektrische Schnittstelle sein.

(b) Bestimmen eines Versorgungszustandswerts GVZ, welcher den durch die Heizungsanlage zu deckenden Wärmebedarf der an den Rohrkreislauf der Heizungsanlage angeschlossenen Wärmeverbraucher anzeigt, und Überprüfen, ob der Versorgungszustandswert GVZ innerhalb eines vordefinierten Wertebereichs liegt, welcher eine Absenkung des Differenzdrucks $dp$ erlaubt, ohne dass die Heizungsanlage einen Unterversorgungszustand aufweist bzw. in einen Unterversorgungszustand kommt. Wenn der Versorgungszustandswert GVZ nicht innerhalb des vordefinierten Wertebereichs liegt, werden die nachfolgenden Verfahrensschritte erfindungsgemäß vorzugsweise nicht ausgeführt. Mit anderen Worten erfolgt das nachfolgend beschriebene Absenken des Differenzdrucks $dp$ nur, wenn der Versorgungszustandswert GVZ innerhalb des vordefinierten Wertebereichs liegt. Erfindungsgemäß ist in einer Variante des Verfahrens denkbar, dass der Differenzdruck $dp$ um ein Differenzdruckinkrement $\Delta dp_{ink}$ erhöht wird, wenn der Versorgungszustandswert GVZ außerhalb des vordefinierten Wertebereichs liegt, dass eine Änderungszeitspanne abgewartet wird und dass das Verfahren mit dem Verfahrensschritt (a) fortgesetzt wird.

(c) Absenken des Differenzdrucks $dp$ um ein vorbestimmtes Differenzdruckdekrement $\Delta dp_{dek}$ (im Sinne einer Differenzdruckänderung $\Delta dp$) und Abwarten einer Änderungszeitspanne, welche derart bemessen ist, dass das Ändern des Differenzdrucks $dp$ messbare Auswirkungen in der Heizungsanlage, insbesondere Auswirkungen bei der Rücklauftemperatur $\vartheta_R$ und/oder dem Versorgungszustandswert GVZ, zeigt bzw. zeigen müsste, wenn solche Auswirkungen erzeugt werden. Je nach Größe und Art der Heizungsanlage kann eine sinnvoll bemessene Änderungszeitspanne zwischen 10 Minuten und 120 Minuten liegen. Entsprechend nachstehend noch erläuterter Kriterien kann der Fachmann eine Änderungszeitspanne erfindungsgemäß sinnvoll festlegen, auch außerhalb der vorstehenden Zeitspanne und/oder dynamisch anhand von Messkriterien.

(d) Messen der Rücklauftemperatur $\vartheta_R$ und Bestimmen der Rücklauftemperaturänderung $\Delta\vartheta_R$ nach der Änderung des Differenzdrucks $dp$. Zusammen mit der Rücklauftemperatur $\vartheta_R$ kann erfindungsgemäß auch Differenzdruck $dp$ gemessen werden, bspw. um zu überprüfen, ob das Differenzdruckdekrement $\Delta dp_{dek}$ oder ein Differenzdruckinkrement $\Delta dp_{ink}$ in der Heizungsanlange korrekt umgesetzt wurde oder um den aktuellen Differenzdruck $dp$ als Messwert zu erhalten.

(e) Bestimmen eines Versorgungszustandswerts GVZ nach der Änderung des Differenzdrucks $dp$.

(f) Überprüfen, ob die Rücklauftemperaturänderung $\Delta\vartheta_R$ kleiner Null ist, d.h. die Rücklauftemperatur $\vartheta_R$ sinkt, und ob der Versorgungszustandswert GVZ innerhalb des vordefinierten Wertebereichs liegt, wobei das Verfahren in diesem Fall mit dem Verfahrensschritt (c) fortgesetzt wird. Weil mit Sinken der Rücklauftemperatur $\vartheta_R$ auch der Nutzungsgrad des Wärmeerzeugers steigt, kann durch Wiederholen einer weiteren Absenkung des Differenzdrucks $dp$ um vorzugsweise ein weiteres Differenzdruckdekrement $\Delta dp_{dek}$ versucht werden, den Nutzungsgrad des Wärmeerzeugers weiter zu erhöhen. Dies erfolgt dann in einem weiteren Verfahrenszyklus.

(g) Überprüfen, ob die Rücklauftemperaturänderung $\Delta\vartheta_R$ größer Null ist, d.h. die Rücklauftemperatur steigt, wobei in diesem Fall Differenzdruck $dp$ um ein Differenzdruckinkrement $\Delta dpi_{nk}$ angehoben wird, eine Änderungszeitspanne abgewartet wird und das Verfahren mit dem Verfahrensschritt (d) fortgesetzt wird. Optional kann in diesem Schritt auch geprüft werden, ob der Versorgungszustandswert GVZ innerhalb des vordefinierten Wertebereichs liegt. Wäre dies nicht der Fall, würde zum Gegensteuern auch der Differenzdruck $dp$ entsprechend erhöht, so dass auf diese Prüfung verzichtet werden kann. Diese Prüfung macht aber dann Sinn, wenn für den Fall, dass der Versorgungszustandswert GVZ außerhalb des vordefinierten Wertebereichs des Versorgungszustandswerts GVZ liegt, ein größeres Differenzdruckinkrement $\Delta dp_{ink}$ angewendet werden soll. Dann führt diese Prüfung dazu, dass auch der nachfolgende Schritt noch ausgeführt würde, der für diesen Fall eine Differenzdruckerhöhung vorsieht.

(h) Überprüfen, ob der Versorgungszustandswert GVZ außerhalb des vordefinierten Wertebereichs liegt, wobei in diesem Fall der Differenzdruck $dp$ um ein Differenzdruckinkrement $\Delta dp_{ink}$ angehoben wird, eine Änderungszeitspanne abgewartet wird und das Verfahren mit dem Verfahrensschritt (d) fortgesetzt wird. In diesem Fall kann das Differenzdruckinkrement $\Delta dp_{ink}$ optional erfindungsgemäß größer gewählt werden als in dem vorbeschrieben Schritt (g).

In einem zusätzlichen Verfahrensschritt (i) kann erfindungsgemäß überprüft überprüft werden, ob die Rücklauftemperatur ($\vartheta_R$) größer als eine vorgegebene minimale Rücklauftemperatur ($\vartheta_{R,min}$) ist. Wenn dies nicht der Fall ist, d.h. die Rücklauftemperatur ($\vartheta_R$) kleiner als die vorgegebene minimale Rücklauftemperatur ($\vartheta_{R,min}$) ist, dann werden im Rahmen dieses Verfahrensschritts der Differenzdruck $dp$ um Differenzdruckinkrement $\Delta dp_{ink}$ angehoben, eine Änderungszeitspanne abgewartet und das Verfahren mit dem Verfahrensschritt (d) fortgesetzt, d.h. mit dem Messen der Rücklauftemperatur ($\vartheta_R$) und Bestimmen der Rücklauftemperaturänderung ($\Delta\vartheta_R$) sowie den dann folgenden Schritten. Dieser Verfahrensschritt ist insbesondere dann sinnvoll, wenn für den Betrieb des Wärmeerzeugers notwendig ist, eine bestimmte Mindestrücklauftemperatur, d.h. eine minimale Rücklauftemperatur ($\vartheta_{R,min}$), einzuhalten. Eine solche minimale Rücklauftemperatur ($\vartheta_{R,min}$) wird insbesondere durch einen Hersteller des Wärmeerzeugers vorgeschrieben.

Die Verfahrensschritte (a) und (b) sowie (d) und (e) sowie (f) und (g) und (h) und (i) können in ihrer Reihenfolge erfindungsgemäß jeweils auch getauscht werden. Mit anderen Worten kann Verfahrensschritt (b) vor Verfahrensschritt (a), Verfahrensschritt (e) vor Verfahrensschritt (d), Verfahrensschritt (h) vor einem oder beiden der Verfahrensschritte (f) oder (g) und/oder Verfahrensschritt (f) nach einem oder beiden der Verfahrensschritte (f) oder (g) durchgeführt werden. Entsprechendes gilt für den Verfahrensschritt (i).

Wenn Verfahrensschritt (h) vorgezogen wird, kann eine explizite Überprüfung des Versorgungszustandswerts GVZ in den Verfahrensschritten (f) und/oder (g) auch jeweils unterbleiben, weil diese Verfahrensschritte nur dann erreicht werden, wenn der Versorgungszustandswert GVZ innerhalb des vordefinierten Wertebereichs liegt. Insofern kann die Überprüfung des Versorgungszustandswerts GVZ in den Verfahrensschritten (f) und/oder (g) auch jeweils implizit erfolgen, bspw. durch ein Vorziehen des Verfahrensschritts (h).

Als Versorgungszustandswert GVZ im Sinne der Erfindung wird eine ermittelte Größe verstanden, die den Wärmebedarf in einem Gebäude definiert. Anhand dieser Größe kann dann entschieden werden, ob das Gebäude ausreichend und angemessen mit Heizwärme versorgt wird, ein Überangebot an Heizwärme zur Verfügung gestellt wird (Überversorgungszustand) oder ein Unterangebot an Heizwärme herrscht (Unterversorgungszustand). Ein Unterversorgungszustand korreliert also mit einem Unterangebot an Heizwärme und wird von den Bewohnern als thermischer Diskomfort wahrgenommen. Ein solcher Zustand soll vermieden werden. Dies kann dadurch überprüft werden, dass festgesellt wird, ob der Versorgungszustandswert innerhalb eines vordefinierten Wertebereichs liegt, bspw. also oberhalb oder unterhalb eines Schwellwertes des Versorgungszustandswerts GVZ, der die Grenze zu einem Unterversorgungszustand angibt. Eine solche Grenze bzw. der vordefinierte Wertebereich können empirisch oder durch analytische Berechnungsverfahren ermittelt werden. Nähere Erläuterungen zu bevorzugten Ausführungsbeispielen für die Ermittlung des Versorgungszustandswerts werden nachfolgend noch gegeben.

Die Änderungszeitspanne, welche in dem System nach einer Differenzdruckerhöhung oder Differenzdruckabsenkung gewartet wird, damit die Auswirkungen dieser Änderung im System detektierbar sind, kann gemäß einer einfachen Ausführungsform der Erfindung eine vorgegebene Zeit sein, die in dem System fest eingestellt ist. Diese kann bspw. für alle Heizungsanlagen gleich in der Steuereinrichtung vorgegeben sein. Es ist auch denkbar, die vorgegebene Zeit alternativ auch bspw. als parametrierbaren Wert in der Steuereinrichtung vorzugeben, so dass die Änderungszeitspanne an die jeweilige Heizungsanlage angepasst werden kann.

Andererseits kann die Änderungszeitspanne bspw. auch als Funktion bestimmter Eingangsgrößen, insbesondere des absoluten oder relativen Differenzdruckdekrements $\Delta dp_{dek}$ oder Differenzdruckinkrements $\Delta dp_{ink}$, ermittelt werden. Hintergrund der Änderungszeitspanne ist, dass diese durch den Fachmann in der Weise festgelegt wird, dass sich die Heizungsanlage nach Anwenden der Differenzdruckänderung $\Delta dp$ im Sinne eines Differenzdruckdekrements $\Delta dp_{dek}$ oder Differenzdruckinkrements $\Delta dp_{ink}$ wieder in einem stationären oder quasistationären Zustand befindet.

Ein solcher stationärer oder quasi-stationärer Zustand der Heizungsanlage kann insbesondere dadurch gekennzeichnet sein, dass sich die Beobachtungsgrößen Rücklauftemperatur $\vartheta_R$ und/oder Versorgungszustandswert GVZ nach dem Anwenden des Differenzdruckdekrements $\Delta dp_{dek}$ oder des Differenzdruckinkrements $\Delta dp_{ink}$ nach einer Phase der Änderung über einen definierten Zeitraum innerhalb vordefinierter Toleranzen nicht ändern. Diese Toleranzen sind vorzugsweise einstellbar und können durch den Fachmann bspw. empirisch ermittelt und in der Steuereinrichtung eingegeben werden. Es ist auch denkbar, diese Toleranzen in der Steuereinrichtung fest und unveränderlich, bspw. aufgrund von typischen Erfahrungswerten, vorzugeben. Vor diesem Hintergrund ist es auch möglich, den Temperaturverlauf bspw. der Rücklauftemperatur nach Anwenden des Differenzdruckdekrements $\Delta dp_{dek}$ zu bestimmen und die zeitliche Änderung der Rücklauftemperatur zu ermitteln. Ein stationärer oder quasi-stationärer Zustand der Heizungsanlage wird in einem solchen Fall erfindungsgemäß bspw. dann angenommen, wenn die Änderung der Rücklauftemperatur unter einem Toleranzschwellwert liegt, der vorzugsweise in der Größenordnung der Schwankungsbreite der Messwerte liegt. Wenn dieser Zustand erreicht ist, wird die Änderungszeitspanne, welche mit dem Anwenden des Vorlauftemperaturdekrements beginnt, beendet. Dies entspricht einem dynamischen Festlegen der Änderungszeitspanne.

Alternativ oder zusätzlich kann in vergleichbarer Weise auch ein Verlauf des Versorgungszustandswerts bestimmt und dessen zeitliche Änderung ermittelt werden. Auch hieraus ergibt sich in analoger Weise ein stationärer oder quasi-stationärer Zustand, über dessen Feststellen die Änderungszeitspanne beendet wird. Auch eine Kombination beider Verläufe (Temperaturverlauf der Rücklauftemperatur und Verlauf des Versorgungszustandswerts) kann als Kriterium herangezogen werden.

Die Änderungszeitspanne kann erfindungsgemäß nach dem Anwenden des Differenzdruckinkrements $\Delta dp_{ink}$ bzw. Differenzdruckinkrements $\Delta dp_{ink}$ oder nach Erreichen des geänderten Differenzdrucks $dp$ beginnen.

Erfindungsgemäß kann das Verfahren (bzw. können die einzelnen Verfahrensschritte) während des Heizbetriebs der Heizungsanlage durchgeführt werden. Das Verfahren kann quasi kontinuierlich durchgeführt werden, d.h. die vorbeschriebenen Verfahrenszyklen werden nacheinander immer wieder wiederholt.

Eine solche quasi kontinuierliche Durchführung bedeutet, dass das Verfahren erst beendet wird, wenn der Heizbetrieb der Heizungsanlage endet. Zwischen den einzelnen, vorzugsweise zwischen bestimmten, Verfahrensschritten können jedoch größere Pausen eingelegt werden. Pausen bieten sich erfindungsgemäß insbesondere dann an, wenn bspw. in zwei aufeinander folgenden Verfahrenszyklen ein Wechsel zwischen einer positiven und einer negativen Rücklauftemperaturreaktion oder ein Wechsel von einem Versorgungszustandswert GVZ innerhalb des vordefinierten Wertebereichs zu einem Versorgungszustandswert GVZ innerhalb des vordefinierten Wertebereichs stattfindet. Beides deutet darauf hin, dass für den aktuellen Arbeitspunkt eine optimale Druckdifferenzeinstellung für das Betreiben der Heizungsanlage unter dem Gesichtspunkt der Maximierung des Nutzungsgrads des Wärmeerzeugers gefunden wurde.

Ein Verfahrenszyklus soll erfindungsgemäß dadurch definiert sein, dass ein Verfahrenszyklus mit einem Sprung zu einem vorherigen Verfahrensschritt endet. Während des dann folgenden Verfahrenszyklus werden die Verfahrensschritte konsekutiv in der beschriebenen oder in Anspruch 1 beanspruchten Reihenfolge abgearbeitet, bis der Verfahrenszyklus durch einen erneuten Sprung beendet wird.

Eine größere Pause ist definiert als eine Unterbrechung des Verfahrens zwischen zwei Verfahrensschritten, die länger dauert als eine Änderungszeitspanne. Die größere Pause kann bspw. das 3- bis 10-fache einer Änderungszeitspanne betragen. Hierdurch wird ein zu häufiger Nachregelbedarf des Gesamtsystems, insbesondere einer Heizungsregelung oder einer Raumtemperaturregelung, vermieden. Eine Änderungszeitspanne in typischen Heizungsanlagen kann häufig in der Größenordnung zwischen 10 und 120 Minuten liegen, ohne dass die Erfindung auf diese Größenordnung beschränkt ist. Eine Änderungszeitspanne kann durch den Fachmann für jede Heizungsanlage bspw. durch die beschriebenen Messungen ermittelt werden; die größere Pause kann sich dann vorzugsweise durch die 3- bis 10-fache Zeitdauer ergeben.

In einer einfachen Ausführungsform der Erfindung kann das Differenzdruckdekrement $\Delta dp_{dek}$ als fest vorbestimmter Wert festgelegt und bspw. in der Steuereinrichtung hinterlegt sein. Erfindungsgemäß bevorzugt ist es jedoch, wenn das Differenzdruckdekrement $\Delta dp_{dek}$, insbesondere vor jeder Anwendung, aus dem aktuellen berechneten oder gemessenen der Differenzdruck $dp$ und einem in der Heizungsanlage vorgegebenen minimalen Differenzdruck $dp_{min}$ berechnet wird. Dazu kann insbesondere der vorgegebene minimale Differenzdruck $dp_{min}$ von dem aktuellen Differenzdruck $dp$ abgezogen und die Differenz mit einem Dekrement-Parameter (*Param*) mit einem Wert zwischen 0 und 1 multipliziert werden. Ein bevorzugter Wert des Dekrement-Parameters (*Param*) liegt zwischen 0,025 und 0,1, bspw. bei 0,05. Durch eine solche Bestimmung des Differenzdruckdekrement $\Delta dp_{dek}$ wird verhindert, dass der aktuelle Differenzdruck $dp$ unter einen durch die Heizungsanlage vorgegebene minimalen Differenzdruck $dp_{min}$ fällt, der im operativen Betrieb nicht unterschritten werden sollte, weil die Heizungsanlage und/oder der Wärmeerzeuger nicht für einen operativen Betrieb unter einem vorgegebenen minimalen Differenzdruck $dp_{min}$ ausgelegt sind. Eine entsprechende Berechnung kann auch für das Differenzdruckinkrement $\Delta dp_{ink}$ durchgeführt werden.

Das Differenzdruckdekrement $\Delta dp_{dek}$ und das Differenzdruckinkrement $\Delta dp_{ink}$ können erfindungsgemäß gleich sein. Die Erfindung kann jedoch auch umgesetzt werden, wenn Differenzdruckdekrement $\Delta dp_{dek}$ und Differenzdruckinkrement $\Delta dp_{ink}$ verschieden sind.

Eine erfindungsgemäß besonders bevorzugte Bestimmung des Differenzdruckinkrements $\Delta dp_{ink}$ sieht vor, dass das Differenzdruckinkrement $\Delta dp_{ink}$ in Abhängigkeit von dem Versorgungszustandswert GVZ ermittelt wird. Bspw. kann das Differenzdruckinkrement $\Delta dp_{ink}$ gleich dem Differenzdruckdekrement $\Delta dp_{dek}$ gewählt werden, solange der Versorgungszustandswert GVZ innerhalb des vordefinierten Wertebereichs liegt. Wenn der Versorgungszustandswert GVZ außerhalb des vordefinierten Wertebereichs liegt, welcher dann erfindungsgemäß vorzugsweise eine Unterversorgung der Heizungsanlage mit Wärme oder mit anderen Worten einen zusätzlichen Wärmebedarf anzeigt, kann das Differenzdruckinkrement $\Delta dp_{ink}$ bspw. proportional zu dem Betrag der Differenz des aktuellen Versorgungszustandswerts GVZ zu dem Versorgungszustandsgrenzwert, bspw. einem minimalen Versorgungszustandswert $GVZ_{min}$ gewählt werden, um durch das Differenzdruckinkrement $\Delta dp_{ink}$ möglichst schnell wieder zu einem Arbeitspunkt der Heizungsanlage zu kommen, bei dem der Versorgungszustandswert GVZ innerhalb des vordefinierten Wertebereichs liegt. Der Versorgungszustandsgrenzwert gibt vorzugsweise den Grenzwert zwischen dem vordefinierten Wertebereich und Werten des Versorgungszustandswerts GVZ außerhalb dieses Wertebereichs an. Erfindungsgemäß ist es auch möglich, das Differenzdruckdekrement $\Delta dp_{dek}$ entsprechend zu bestimmen.

Erfindungsgemäß kann ergänzend oder alternativ auch vorgesehen werden, dass das Differenzdruckinkrement

$\Delta dp_{ink}$ so gewählt wird, dass der Differenzdruck $dp$ nach Anwendung des Differenzdruckinkrement $\Delta dp_{ink}$ einen vorgegebenen maximalen Differenzdruck $dp_{max}$ nicht überschreitet. Der maximale Differenzdruck $dp_{max}$ kann bspw. als heizungsanlagenspezifischer Grenzwert vorgegeben sein. In diesem Fall kann das Differenzdruckinkrement $\Delta dp_{ink}$ aus der Differenz des maximalen Differenzdrucks $dp_{max}$ und dem aktuellen Differenzdruck $dp$, multipliziert mit einem Parameter *Param*, ermittelt werden. Der Parameter *Param* kann genauso gewählt sein wie im Falle des Differenzdruckdekrements $\Delta dp_{dek}$. Diese Berechnung hat den Vorteil, implizit auch die Abhängigkeit von dem Versorgungszustandswert GVZ zu berücksichtigen, weil sich der Versorgungszustandswert GVZ mit sinkendem Differenzdruck $dp$ in Richtung einer Unterversorgung der Heizungsanlage bewegt und im Falle einer echten Unterversorgung der Abstand des Differenzdrucks $dp$ von dem maximalen Differenzdruck $dp_{max}$ am größten ist. Damit ist im Falle der Unterversorgung in der Heizungsanlage das Differenzdruckinkrement $\Delta dp_{ink}$ groß und bewirkt eine schnelle Beendigung des Unterversorgungszustands. Anders ausgedrückt kehrt der Versorgungszustandswert GVZ durch ein hohes Differenzdruckinkrement $\Delta dp_{ink}$ rasch in den vordefinierten Wertebereich zurück.

Der Versorgungszustandswert GVZ kann erfindungsgemäß aus Versorgungszuständen von vorzugsweise allen in dem Rohrkreislauf der Heizungsanlage angeordneten Wärmeverbrauchern ermittelt werden, wobei der Versorgungszustand eines Wärmeverbrauchers den zusätzlichen positiven oder negativen Wärmebedarf des Wärmeverbrauchers anzeigt und mit dem Volumenstrom und/oder Temperaturen des den Wärmeverbraucher durchströmenden Wärmeübertragungsmediums über Kennlinien, bspw. in Form empirischer Kennlinien oder analytischer Berechnungsverfahren als Kennlinien, korreliert ist. Vorzugsweise kann der Volumenstrom dabei ins Verhältnis zu dem maximalen Nennvolumenstrom durch den Wärmeverbraucher gesetzt werden.

Ein Wärmeverbraucher kann im Rahmen dieser Offenbarung insbesondere ein Heizkörper oder eine Fußbodenheizung sein, welche die durch das Wärmeübertragungsmedium (in der Regel Warmwasser) angebotene Wärmeleistung insbesondere an Räume abgeben kann, um diese auf eine gewünschte Raumtemperatur zu bringen. Dazu sind die Räume üblicher Weise mit einer Raumtemperaturregelung ausgestattet, die einfacher Weise ein handbetätigtes Thermostatventil sein kann. Das Thermostatventil regelt den Volumenstrom durch den Heizkörper respektive Wärmeverbraucher.

Wenn ein Wärmeverbraucher mit einem relativ niedrigen Volumenstrom (bezogen auf den maximal möglichen (Nenn-)Volumenstrom) durchströmt wird, deutet dies darauf hin, dass kein großer zusätzlicher Wärmebedarf für den Heizkörper (bzw. allgemeiner Wärmeverbraucher) besteht. Entsprechend ist der Versorgungszustand des Wärmeverbrauchers hoch, d.h. es liegt keine Unterversorgung des Wärmeverbrauchers vor. Ein besonders niedriger Volumenstrom weist vielmehr darauf hin, dass dieser Wärmeverbraucher sogar überversorgt ist, weil er nur einen sehr kleinen Teil der angebotenen Wärme aufnimmt.

Wird ein Wärmeverbraucher dagegen mit einem relativ hohen Volumenstrom (bezogen auf den maximal möglichen (Nenn-)Volumenstrom) bzw. dem maximalen Volumenstrom durchströmt, zeigt dies einen hohen zusätzlichen Wärmebedarf für den Heizkörper (bzw. allgemeiner Wärmeverbraucher) an, weil nahezu die gesamte durch das Wärmeübertragungsmedium angebotene Wärmeleistung aufgenommen wird. In diesem Fall liegt ein deutlicher Unterversorgungszustand des Wärmeverbrauchers vor.

Das Ermitteln des aufgrund des vorbeschriebenen Zusammenhangs zumindest implizit mit dem Volumenstrom korrelierten Versorgungszustands für einen Wärmeverbraucher kann auf verschiedene Arten erfolgen.

Eine Vielzahl von Wärmeverbrauchern ist mit einer elektronischen Einzelraumregelung ausgestattet, welche den Volumenstrom durch den Wärmeverbraucher über elektrisch angesteuerte Stellventile ansteuert. Dies kann bspw. für Heizkörper oder Fußbodenheizungen als Wärmeverbraucher gelten. In diesem Fall kann aus den Ventilstellungen der Stellventile auf den Volumenstrom durch die Wärmeerzeuger geschlossen und daraus über bspw. empirisch ermittelte oder aufgrund analytischer Berechnungsverfahren definierte Kennlinien für die jeweiligen Typen der Wärmeerzeuger der Versorgungszustand für den Wärmeverbraucher bestimmt werden. Ebenso sind lokale Versorgungspumpen beziehungsweise dezentrale Umwälzpumpen bekannt, mit denen der Versorgungszustand für den Wärmeverbraucher bestimmt werden kann. Bei Systemen mit dezentralen Versorgungspumpen, wie sie bspw. in der EP 1 752 852 offenbart sind, wird raumtemperaturabhängig die Durchflussmenge durch den Heizkörper geändert, was im Wesentlichen durch eine Änderung der Drehzahl einer derartigen Pumpe bzw. der Änderung der elektrischen Leistungsaufnahme erfolgen kann. Eine derartige, dezentral angeordnete Pumpe übernimmt in solchen Heizungssystemen dementsprechend die Aufgabe eines bislang an dieser Stelle vorgesehenen Ventils, z.B. Thermostatventils. Über die aktuelle Drehzahl jeder dezentralen Versorgungspumpe kann auf den Versorgungszustandswert geschlossen werden.

Es ist auch möglich, aus Heizkörper-Temperaturwerten (im Falle eines Heizkörpers als Wärmeverbraucher) auf den Volumenstrom des Wärmeübertragungsmediums in dem Wärmeverbraucher (insbesondere einem Heizkörper) bzw. auch unmittelbar auf den Versorgungszustand des Wärmeverbrauchers mittels bspw. empirisch ermittelten oder aufgrund analytischer Berechnungsverfahren definierten Kennlinien zurückzuschließen. Dazu werden insbesondere eine Heizkörperoberflächentemperatur und eine Heizkörpervorlauftemperatur oder eine Heizkörpervorlauftemperatur und eine Heizkörperrücklauftemperatur als Heizkörper-Temperaturwerte ermittelt. Durch Differenzbildung mit der Heizkörper-Umgebungslufttemperatur werden entsprechende Übertemperaturen berechnet. Diese können - unter Verwendung weiterer Kenngrößen des Heizkörpers und einem auf physikalischen Gesetzmäßigkeiten beruhenden Heizkörpermodell - in einen Volumenstrom des Heizkörpers umgerechnet werden. Diese Heizkörpermodelle und die physikalischen Gesetzmäßigkeiten sind dem Fachmann aus der Heizkostenerfassung mittels Heizkostenverteilern bekannt und müssen daher an dieser Stelle nicht mehr ausführlich beschrieben werden. Zur Messung der Temperaturwerte können herkömmliche, an der Oberfläche der Heizkörper angebrachte Heizkostenverteiler verwendet werden.

Ferner ist es möglich, den Volumenstrom (pro Zeiteinheit) durch die Wärmeverbraucher direkt zu messen, wie dies bspw. bei Fußbodenheizungen mittels Wärmemengenzählern üblich ist. Dieser gemessene Volumenstrom kann dann direkt über eine bspw. empirisch ermittelte Kennlinie in einen Versorgungszustand des Wärmeverbrauchers umgewandelt werden. Auch dies ist dem Fachmann bekannt und muss daher an dieser Stelle nicht ausführlicher beschrieben werden.

Die zuvor beschriebenen Ermittlungen der Versorgungszustände stellen dem Fachmann bspw. aus der EP 1 456 727 B1, der EP 1 933 220 B1 oder der EP 1 645 928 B1 bekannte Technologien dar.

Aus den einzelnen Versorgungszuständen der Wärmeverbraucher, die auch als Heizflächenversorgungszustände bezeichnet werden, wird dann ein Versorgungszustandswert GVZ für die Heizungsanlage ermittelt, der sich auf die gesamte Heizungsanlage eines Gebäudes oder auch nur ggf. separate Heizkreise der Heizungsanlage beziehen kann. Der den thermischen Versorgungszustand anzeigende Versorgungszustandswert GVZ wird daher auch als Heizkreis- oder Gebäudeversorgungszustand bezeichnet.

Eine besonders einfache Ermittlung eines Versorgungszustandswerts GVZ aus den einzelnen Versorgungszuständen der Wärmeverbraucher besteht darin, die einzelnen Versorgungszustände ggf. gewichtet zu mitteln. Das Ergebnis dieser Mittelung kann dann den Versorgungszustandswert GVZ für die Heizungsanlage (Gebäude- oder Heizkreisversorgungszustand) bilden. Anstelle der Mittelung kann durch den Fachmann auch ein geeigneter anderer funktionaler Zusammenhang verwendet werden.

Eine verbesserte Möglichzeit zur Ermittlung des Versorgungszustandswerts GVZ sieht vor, die Versorgungszustände der Wärmeverbraucher jeweils nach Unterversorgungszuständen und nach Überversorgungzuständen zu bewerten und separat zu mitteln, so dass es einen mittleren Überversorgungszustand der (überversorgten) Wärmeverbraucher der Heizungsanlage und einen mittleren Unterversorgungszustand der (unterversorgten) Wärmeverbraucher der Heizungsanlage gibt. Die Mittelung kann als arithmetische oder gewichtete Mittelung durchgeführt werden.

Die gemittelten Über- und Unterversorgungszustände werden dann in einer Fuzzy-Logik bewertet. Dazu werden die Über- und Unterversorgungszustände mittels Fuzzy-Zugehörigkeitsfunktionen bewertet, indem die Über- und Unterversorgungszustände bestimmten Funktionswerten von Fuzzy-Variablen zugewiesen werden. Im konkreten Beispiel bieten sich bspw. linguistische Fuzzy-Variablen (wie "hohe Unterversorgung", "mittlere Unterversorgung", "geringe Unterversorgung, "korrekte Versorgung", "geringe Überversorgung", "mittlere Überversorgung", "hohe Überversorgung") an, denen je nach Mittelwert (bspw. über eine Kennlinie oder einen funktionalen Zusammenhang) bestimmte Funktionswerte zugeordnet werden. Aus diesen Funktionswerten werden dem zu ermittelnden Versorgungszustandswert GVZ mittels Fuzzy-Regeln jeweils einer Regel zugeordnete Versorgungszustandswerte $GVZ_j$ mit ihrem jeweiligen Erfüllungsgrad $\eta_j$; ermittelt, wobei der Laufindex j die Anzahl der Regeln angibt. Die einer Regel mit ihrem jeweiligen Erfüllungsgrad $\eta_j$ zugeordneten Versorgungszustandswerte $GVZ_j$ werden bei einer abschließenden Defuzzifizierung bspw. über eine Schwerpunktbildung in den Versorgungszustandswert GVZ umgerechnet.

Die Anwendung der Fuzzy-Logik hat den Vorteil, dass mathematisch geschlossen nur schlecht beschreibbare Kriterien (wie bspw. auch ein gefühlter thermischer Diskomfort) mit in die Berechnung des Versorgungszustandswerts GVZ eingehen können, indem dafür geeignete Regeln definiert werden. Das Auffinden geeigneter Regeln wird der Fachmann im Rahmen seines Fachwissens vornehmen, bspw. in Anlehnung an die Anwendung der Fuzzy-Logik auch für diesen Anwendungsfall, die bereits aus der EP 1 456 727 B1 bekannt ist.

Die vorstehend beschriebene Ermittlung des Versorgungszustandswerts GVZ stellt eine im Zusammenhang mit dem beschriebenen Verfahren besonders bevorzugte Methode dar.

In einer weiteren, besonders bevorzugten Methode zur Ermittlung des Versorgungszustandswerts GVZ kann der Versorgungszustandswert als Heizleistungsreserve HLR oder als Betriebsleistungsverhältnis BLV verstanden werden.

Die Heizleistungsreserve HLR eines Wärmeverbrauchers ist definiert als Größe, welche die Differenz zwischen der Wärmeleistung bei aktueller Vorlauftemperatur $\vartheta_V$ am Heizkörper und Nennmassenstrom $\dot{Q}_{100}(\vartheta_V)$ und der aktuellen Wärmeleistung (bei der aktuellen Vorlauftemperatur $\vartheta_V$ am Heizkörper) $\dot{Q}_{akt}(\vartheta_V)$ in das Verhältnis zu der Wärmeleistung bei aktueller Vorlauftemperatur und Nennmassenstrom $\dot{Q}_{100}(\vartheta_V)$ setzt:

$$HLR = \frac{\dot{Q}_{100}\left(\vartheta_V\right) - \dot{Q}_{akt}\left(\vartheta_V\right)}{\dot{Q}_{100}\left(\vartheta_V\right)} = 1 - \frac{\dot{Q}_{akt}\left(\vartheta_V\right)}{\dot{Q}_{100}\left(\vartheta_V\right)} \cong 1 - \left(\frac{\Delta_{Log}}{\Delta_{Log,100}}\right)^{n\_HK}$$

wobei

$\Delta_{Log}$  die aktuelle logarithmische Übertemperatur (bei aktueller Vorlauftemperatur);
$\Delta_{Log,100}$  die logarithmische Übertemperatur bei Nennmassestrom (und bei aktueller Vorlauftemperatur); und
n_HK  der Exponent des Wärmeverbrauchers (bspw. Heizkörper)

sind.

Die aktuelle logarithmische Übertemperatur $\Delta_{Log}$ ist definiert als

$$\Delta_{\text{Log}} = \frac{\Delta\vartheta_{\text{V}} - \Delta\vartheta_{\text{R}}}{\ln(\Delta\vartheta_{\text{V}}) - \ln(\Delta\vartheta_{\text{R}})} = \text{K}_{\text{CW}} \cdot \text{K}_{\text{CL}} \cdot \Delta_{\text{HKV}}$$

wobei

$\Delta\vartheta_V = \vartheta_V - \vartheta_L$  die Vorlaufübertemperatur des Heizkörpers;
$\Delta\vartheta_R = \vartheta_R - \vartheta_L$  die Rücklaufübertemperatur des Heizkörpers;
$\vartheta_V$  die Vorlauftemperatur am Heizkörper;
$\vartheta_R$  die Rücklauftemperatur am Heizkörper;
$\vartheta_L$  die Umgebungslufttemperatur am Heizkörper;

sind. Diese Größen können durch geeignete Sensoren gemessen und aus den Messwerten errechnet werden.

Im Falle eines an dem Heizkörper angebrachten 2-Fühler Heizkostenverteilers wird die aktuelle logarithmische Übertemperatur $\Delta_{Log}$ aus der Übertemperatur $\Delta_{HKV}$ des Heizkostenverteilers ermittelt, wie sich auch aus der vorstehenden Gleichung ergibt. Dabei sind

$\Delta_{HKV} = \vartheta_{HKS} - \vartheta_{RLS}$  die Heizkostenverteiler-Übertemperatur;
$\vartheta_{HKS}$  die heizkörperseitige Temperatur des Heizkostenverteilers;
$\vartheta_{RLS}$  die raumluftseitige Temperatur des Heizkostenverteilers;
$K_{CW}$  wasserseitiger Korrekturfaktor des Heizkörpers entsprechend der DIN 834; und
$K_{CL}$  raumluftseitiger Korrekturfaktor des Heizkörpers entsprechend der DIN 834.

Die logarithmische Übertemperatur bei Nennmassestrom $\Delta_{Log,100}$ kann bspw. in einem Prüfstand für den Wärmeverbraucher (insbesondere den Heizkörper) ermittelt werden, indem der Nennmassestrom für verschiedene Vorlauftemperaturen durch den Heizkörper durchgeführt wird und die entsprechenden Messungen nach den vorstehenden Gleichungen durchgeführt werden.

Darüber hinaus sind dem Fachmann auch Möglichkeiten zur theoretischen Berechnung bspw. aus der EP 2 009 536 B1 bekannt.

Die Heizleistungsreserve HLR gibt an, wie viel Leistungsreserve der Heizkörper bei der aktuellen Vorlauftemperatur noch hat, um ggf. eine höhere Wärmeleistung durch Erhöhung des Heizträgermediums-Volumenstroms durch den Wärmeverbraucher zu erreichen. Diese Größe hat eine ähnliche Aussagekraft wie ein Versorgungszustand des Wärmeverbrauchers und kann bspw. über eine Kennlinie oder eine funktionale Abhängigkeit auch direkt in einen zuvor beschriebenen Versorgungszustand umgerechnet werden. Die Definition der Heizleistungsreserve HLR hat den Vorteil, dass sie entsprechend den vorstehenden Gleichungen aus bei der Verbrauchskostenerfassung ermittelten Größen bestimmt werden kann, ohne dass Kennlinien verwendet werden müssen. Entsprechend kann die Heizleistungsreserve HLR auch direkt zur Bestimmung des Versorgungszustandswerts GVZ herangezogen werden, d.h. der Versorgungszustandswert GVZ ist dann als Gebäude- oder Heizkreisheizleistungsreserve zu verstehen. Dies erfolgt ähnlich wie für die Bestimmung des Versorgungszustandswerts GVZ aus den Versorgungszuständen der einzelnen Wärmeverbraucher beschrieben.

Anstelle der Heizleistungsreserve HLR in der zuvor erläuterten Definition und Berechnung kann auch das Betriebsleistungsverhältnis BLV verwendet werden, welches die aktuelle Wärmeleistung des Heizkörpers in das Verhältnis zu einer Wärmeleistung bei aktueller Vorlauftemperatur und Nennmassestrom setzt. Heizleistungsreserve und Betriebsleistungsverhältnis können entsprechend der nachstehenden Formel ineinander umgerechnet werden:

$$BLV = 1 - HLR = \frac{\Delta_{Log}}{\Delta_{Log,100}}$$

Die Verwendung der Heizleistungsreserve HLR und des Betriebsleistungsverhältnisses BLV sind dem Fachmann auch in diesem Zusammenhang bekannt. Eine ausführliche theoretische Erläuterung findet sich in der EP 2 009 536 B1. Auf eine genauere Erklärung dieser bekannten Technologie kann daher an dieser Stelle verzichtet werden.

Insbesondere zu Kontrollzwecken und um die Einsparung durch die Erhöhung des Nutzungsgrads des Wärmeerzeugers zu quantifizieren, kann erfindungsgemäß nach dem Abwarten einer Änderungszeitspanne, d.h. insbesondere nach dem Absenken des Differenzdrucks $dp$ um das Differenzdruckdekrement $\Delta dp_{dek}$ oder nach dem Anheben des Differenzdrucks $dp$ um das Differenzdruckinkrement $\Delta dp_{ink}$, vorgesehen sein, dass der Nutzungsrad $\beta$ des Wärmeerzeugers bezogen auf die abgegebene Wärmemenge Q des Erzeugers durch die Wärmeverbraucher für ein gewähltes Zeitintervall bestimmt wird, indem der Quotient aus der durch alle Wärmeerzeuger in dem Rohrkreislauf der Heizungsanlage abgegebenen Wärmemenge Q und der dafür aufgewendeten Endenergie E gebildet wird:

$$\beta = \frac{Q}{E}.$$

Dafür wird erfindungsgemäß die durch die Heizungsanlage insgesamt abgegebene Wärmeleistung Q erfasst. Die Wärmeleistung Q ist durch die in dem Zeitintervall abgegebene Wärmemenge Q definiert. Deren Erfassung kann durch einen zentral im Rohrkreislauf eingebauten Wärmemengenzähler erfolgen, welcher bspw. die Vorlauftemperatur und die Rücklauftemperatur im Bereich des Wärmeerzeugers sowie den Volumenstrom im Rohrkreislauf der Heizungsanlage über das gewählte Zeitintervall erfasst. Durch diese Methode werden auch die Wärmeleistungsverluste im Rohrkreislauf berücksichtigt. Daher ist diese Methode für die Ermittlung des Nutzungsgrads des Wärmeerzeugers besonders genau.

Sofern die Wärmeverbraucher im Rohrkreislauf der Heizungsanlage mit Wärmemengenzählern ausgestattet sind, können auch die jeweils abgegebenen Wärmeleistungen Q in dem gewählten Zeitintervall addiert werden. Ggf. können Wärmeleistungsverluste im Rohrkreislauf durch eine geeignete Abschätzung mittels eines insbesondere von der Länge des Rohrkreislaufs abhängigen Modells abgeschätzt werden. Unter Wärmemengenzähler in diesem Sinne sind auch bspw. elektronische Heizkostenverteiler an Heizkörpern oder Wärmemengenzählern in Fußbodenheizungskreisläufen zu verstehen.

Die Länge des gewählten Zeitintervalls wird erfindungsgemäß insbesondere in Abstimmung mit Betriebsintervallen des Wärmeerzeugers festgelegt. Als Betriebsintervall des Wärmeerzeugers gilt die Zeit vom Anfang bzw. Ende einer Aufheizperiode des Wärmeträgermediums durch Einsatz von Endenergie bis zum jeweils nächsten Anfang bzw. Ende einer Aufheizperiode des Wärmeträgermediums durch Einsatz von Endenergie. Ein solches Betriebsintervall ist gerade mit der Menge der eingesetzten Endenergie korreliert, weil das Betriebsintervall die Zeit des Aufheizens des Wärmeträgermediums und die Zeit der Abgabe der durch den Einsatz der Endenergie erzeugten Wärme durch das Wärmeträgermedium umfasst. Besonders bevorzugt umfasst das gewählte Zeitintervall also gerade ein Betriebsintervall oder ein ganzzahliges Vielfaches davon, d.h. mehrere ganze Betriebsintervalle. Letzteres stellt eine bevorzugte Variante dar, weil eine Mittelung über mehrere Betriebsintervalle erfolgt und so möglicherweise auftretende besondere Effekte in einem Betriebsintervall herausgemittelt werden. Für diese Variante kann einfacher Weise ein Steuersignal von der Wärmeerzeugerregelung, bspw. der Brennerregelung der Heizungsanlage an die zur Durchführung des Verfahrens eingerichtete Steuereinrichtung an der Heizungsanlage vorgesehen sein. Alternativ oder zusätzlich lässt sich ein solches Betriebsintervall auch aus einer zeitlichen Erfassung des Verbrauchs der Endenergie ermitteln.

Eine einfachere Lösung sieht vor, das gewählte Zeitintervall so lang zu wählen, dass eine hohe Zahl von Betriebsintervallen in das gewählte Zeitintervall fällt. Eine Richtgröße sind mindestens 10 Betriebsintervalle, bevorzugt mindestens 20 Betriebsintervalle. In letzterem Fall beträgt der mögliche Fehler bei der Bestimmung der abgegebene Wärmemenge Q und der dafür aufgewendeten Endenergie nur noch 1/20=0,05, d.h. 5%. Die gewünschte Genauigkeit kann der Fachmann so je nach Bedarf einstellen.

Durch beide der vorbeschriebenen Vorgehensweisen wird - mit unterschiedlicher Genauigkeit - eine erfindungsgemäß bevorzugte Normierung auf die eingesetzte Endenergie E erreicht. Im Rahmen seines fachmännischen Könnens kann der Fachmann auch andere Normierungen wählen.

Die aufgewendete Endenergie E kann durch geeignete Sensoren erfasst werden. Hierfür eignen sich Elektroenergie- oder Gaszähler, wobei jeweils ein direkt der Heizungsanlage bzw. dem Wärmeerzeuger zugeordneter Zähler sinnvoll sein kann, sofern die Endenergie auch für andere Verbraucher benutzt wird. Dies ist häufig bei Gebäudeelektroenergiezählern der Fall, die den gesamten Stromverbrauch im Gebäude erfassen. Bei mit Öl als Energieträger betriebenen Wärmeerzeugern kann der Ölfluss zu dem Wärmeerzeuger erfasst werden. Eine alternative Möglichkeit besteht in einer genauen Erfassung des Ölstands in einem Tank. Bei einer Holzpellet-Heizung kann die Endenergie bspw. durch das Volumen oder das Gewicht der verbrauchten Pellets ermittelt werden.

Vorzugsweise werden alle erfassten Verbräuche der Endenergien E in die Einheit kWh (Kilowattstunden) umgerechnet. Dies ist im Rahmen der Verbrauchserfassung der Endenergie E bereits grundsätzlich bekannt und kann von dem Fachmann ohne weiteres umgesetzt werden. Bei nach Volumen erfassten Verbräuchen, bspw. eines Gas- oder Öldurchflusszählers oder eines Pellet-Volumenzählers, wird dazu das erfasste Messvolumen der Endenergie E mit einem bspw. empirisch ermittelten oder bekannten Brennwert multipliziert, um die Einheit kWh zu erhalten.

Teilweise ist es auch bekannt, dass die Regler der Wärmeverbraucher selbst den Verbrauch der Endenergie erfassen und über eine Schnittstelle zur Verfügung stellen. In diesem Fall sind keine weiteren Sensoren, sondern lediglich ein Anschluss der Steuereinrichtung an diese Schnittstelle, bspw. ein Bussystem, notwendig.

Für die Einstellung der für einen möglichst hohen Nutzungsgrad des Wärmeerzeugers optimierten Vor- und Rücklauftemperatur ist die vorbeschriebene Ermittlung des Nutzungsgrads erfindungsgemäß jedoch gerade nicht notwendig, weil das erfindungsgemäß vorgeschlagene Verfahren zur Erhöhung des Nutzungsgrads anstelle einer konkreten Berechnung des Nutzungsgrads in der vorbeschriebenen Weise gerade nur die Reaktionen der Rücklauftemperatur $\vartheta_R$ und des Versorgungszustandswerts GVZ auf eine Änderung des Differenzdrucks $dp$ erfasst und bewertet. Diese Werte liegen in dem System ohnehin vor.

Die Rücklauftemperatur $\vartheta_R$ wird durch die Heizungsanlage selbst gemessen oder kann durch einen einfachen zusätzlichen Temperatursensor ohne großen Aufwand erfasst werden. Der Versorgungszustandswert GVZ lässt sich erfindungsgemäß aus den zur Verbrauchskostenverteilung ohnehin erhobenen Daten ermitteln, wie zuvor beschrieben. Die optionale Erfassung des tatsächlichen Nutzungsgrads des Wärmeerzeugers dient insbesondere der Bestätigung oder der Überprüfung von Modellrechnungen. Diese Größe wird erfindungsgemäß durch das vorgeschlagene Verfahren jedoch gerade nicht verwendet, um eine Erhöhung des Nutzungsgrads selbst zu erreichen.

In Weiterbildung des erfindungsgemäß vorgeschlagenen Verfahrens kann während des Betriebs der Heizungsanlage bei Anwendung des Verfahrens eine bezüglich des Nutzungsgrads des Wärmeerzeugers optimierte Differenzdruckeinstellung dann festgestellt werden, wenn in zwei aufeinander folgenden Verfahrenszyklen ein Wechsel zwischen einer positiven und einer negativen Rücklauftemperaturreaktion oder ein Wechsel von einem Versorgungszustandswert GVZ außerhalb des vordefinierten Wertebereichs zu einem Versorgungszustandswert GVZ innerhalb des vordefinierten Wertebereichs stattfindet. Der Differenzdruck $dp$ der optimierten Differenzdruckeinstellung wird dann vorzugsweise in Abhängigkeit von der Außentemperatur und der Tageszeit in einer Wertetabelle abgelegt.

Gemäß einer bevorzugten Weiterentwicklung dieses Aspekts der vorliegenden Erfindung kann bei einem Start des Verfahrens der in der Wertetabelle gespeicherte Differenzdruck $dp$ als erster Vorgabewert eingestellt werden. Diese Korrelation dient der Verkürzung der Startphase des Algorithmus nach einem Neustart.

Die erfindungsgemäß vorgeschlagene Steuereinrichtung an der Heizungsanlage ist entsprechend zur Durchführung des vorbeschriebenen Verfahrens oder Teilen hiervon eingerichtet. Eine solche Steuereinrichtung entsprechend Anspruch 10 ist insbesondere mit einer Recheneinheit, einem Anschluss zum Messen der Rücklauftemperatur sowie ggf. der Vorlauftemperatur eines Heizmediums und des Differenzdrucks $dp$ einer Heizkreispumpe in der Heizungsanlage, einem Anschluss zum Bestimmen eines Versorgungszustandswerts GVZ, bspw. des thermischen Gebäudeversorgungszustands, und einem Anschluss an den Regler eines Wärmeerzeugers zur Vorgabe eines durch den Wärmeerzeuger in der Heizungsanlage einzustellenden Differenzdrucks $dp$ ausgestattet, wobei die Recheneinheit durch Installation geeigneter Programmcodemittel, d.h. einer geeigneten Software, zur Durchführung des vorbeschriebenen Verfahrens oder Teilen hiervon eingerichtet ist.

Um den Nutzungsgrad des Wärmeerzeugers quantifizieren zu können kann erfindungsgemäß vorgesehen sein, dass die Steuereinrichtung einen Anschluss an einen Zähler zur Erfassung der durch den Wärmeerzeuger verbrauchten Endenergie aufweist. Die Recheneinheit kann dann in der bereits beschriebenen Weise dazu eingerichtet werden, unter Verwendung der in einen bestimmten Zeitraum aufgewendeten Endenergie und der abgegebenen Wärmemenge den Nutzungsgrad des Wärmeerzeugers zu berechnen.

Ferner kann die Steuereinrichtung einen Anschluss für eine Benutzerschnittstelle aufweisen, damit der Nutzer die durch die Steuereinrichtung vorgenommene Optimierung sowie ggf. den erreichten Nutzungsgrad nachvollziehen kann. Über diese oder eine andere, ggf. auch integrierte, Benutzerschnittstelle ist ferner eine Parametrierung der Steuereinrichtung, bspw. bei der Installation oder zur Änderung von Parametern, möglich. Die Benutzerschnittstelle kann bspw. als Anschluss für einen Computer ausgebildet sein.

Die erfindungsgemäße Steuereinrichtung kann in eine Regelung des Wärmeerzeugers oder in eine Vorrichtung zur Vorlauftemperaturadaption integriert sein. Die beschriebenen Anschlüsse können entsprechend als interne oder externe Anschlüsse ausgestaltet sein.

Weitere Vorteile, Merkmale und Anwendungsmöglichkeiten der Erfindung ergeben sich aus der nachfolgenden Beschreibung eines Ausführungsbeispiels und der Zeichnung. Dabei bilden alle beschriebenen oder bildlich dargestellten Merkmale den Gegenstand der vorliegenden Erfindung, auch unabhängig von ihrer Zusammenfassung in den Ansprüchen oder deren Rückbezügen.

Es zeigen:

Fig. 1     schematisch eine Warmwasserheizungsanlage mit einer erfindungsgemäßen Steuereinrichtung gemäß einer bevorzugten Ausführungsform der Erfindung;

Fig. 2     schematisch einen durch das erfindungsgemäße Verfahren gemäß einer bevorzugten Ausführungsform realisierten Regelkreis;

Fig. 3     schematisch einen Ablaufplan des erfindungsgemäßen Verfahrens gemäß einer bevorzugten Ausführungsform;

Fig. 4     eine die Abhängigkeit der Vorlauftemperatur von der Außentemperatur vorgebende beispielhafte Heizkurve für eine Wärmeerzeugerregelung;

Fig. 5     beispielhaft den Wärmeerzeugerwirkungsgrad eines als Brennwertkessel ausgebildeten Wärmeerzeugers in Abhängigkeit von der Rücklauftemperatur;

Fig. 6     beispielhaft den Wärmeerzeugerwirkungsgrad eines als Brennwertkessel ausgebildeten Wärmeerzeugers in Abhängigkeit von der Vorlauftemperaturänderung;

Fig. 7     beispielhaft die einem Wärmeerzeugerwirkungsgrad entsprechende Arbeitszahl eines als Wärmepumpe ausgebildeten Wärmeerzeugers in Abhängigkeit der Außentemperatur;

Fig. 8     beispielhaft und unabhängig von der Art der Wärmequelle den Carnot-Faktor eines Wärmepumpenprozesses in Abhängigkeit der Rücklauftemperatur.

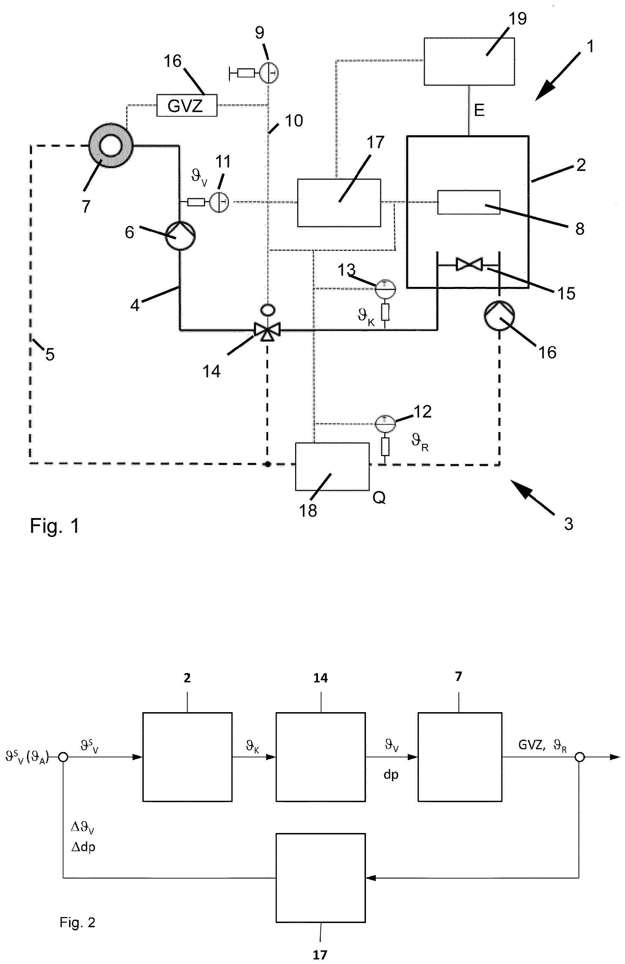

Fig. 1 stellt schematisch eine Warmwasserheizungsanlage 1 als Heizungsanlage mit einem Wärmeerzeuger 2 dar, welcher aus zugeführter Endenergie E Wärme erzeugt und als Wärmeübertragungsmedium Wasser erwärmt, das in einem Rohrkreislauf 3 zirkuliert. Der Rohrkreislauf 3 ist aus einem Vorlauf 4 (in der Zeichnung durch eine durchgezogene Linie dargestellt) und einen Rücklauf 5 (in der Zeichnung durch eine gestrichelte Linie dargestellt) gebildet. In dem Vorlauf 4 wird über eine drehzahlgeregelte oder differenzdruckgeregelte Heizkreispumpe 6 das durch den Wärmeerzeuger 2 erwärmte Wärmeübertragungsmedium (in dem beschriebenen Beispiel Wasser, ohne dass die Erfindung hierauf beschränkt sein soll) in dem Heizkreis zu Heizkörpern 7 geleitet, welche die Wärme an Räume eines Gebäudes abgeben, in denen sich die Heizkörper 7 befinden. Dabei kühlt das Wärmeträgermedium ab und wird durch den Rücklauf 5 zurück zu dem Wärmeerzeuger 2 transportiert, der das Wärmeträgermedium wieder erwärmt und durch den Vorlauf 4 wieder in den Rohrkreislauf einspeist.

Die drehzahl- oder differenzdruckgeregelte Heizkreispumpe 6, die auch als Heizungsumwälzpumpe bezeichnet wird, stellt die eine hydraulische Versorgung der Wärmeverbraucher mit dem Heizmedium sicher. Der Differenzdruck (bzw. die entsprechende Förderhöhe) dieser Heizungsumwälzpumpe 6 kann häufig über elektrische oder auch Bus-Schnittstellen vorgegeben bzw. verändert und ggf. ausgelesen werden.

Der Übersichtlichkeit halber ist in dem Rohrkreislauf 3 nur ein Heizkreis mit nur einem Heizkörper 7 dargestellt. Üblicherweise befinden sich in einem Rohrkreislauf 3 eines Gebäudes ein oder mehrere Heizkreise, die jeweils einen oder mehrere Heizkörper 7 mit dem Wärmeträgermedium versorgen.

Der Wärmeerzeuger 2 weist eine Wärmeerzeugerregelung 8 auf, die häufig auch als Heizungsregelung bezeichnet wird und die durch den Wärmeerzeuger 2 in den Vorlauf 4 eingespeiste Vorlauftemperatur des Wärmeträgermediums auf einen vorgegebenen Temperaturwert einstellt, der bspw. durch eine in Fig. 4 dargestellte Heizkurve vorgegeben ist. Entsprechend der dort beispielhaft dargestellten Heizkurve erzeugt der Wärmeerzeuger bei einer Außentemperatur von 10°C eine Vorlauftemperatur $\vartheta_V$ von etwa 38°C. Bei einer Außentemperatur von -5°C wird eine Vorlauftemperatur $\vartheta_V$ von 58°C eingestellt. Die in der Wärmeerzeugerregelung 8 hinterlegten Heizkurven sind üblicherweise parametrierbar, um sie individuell an die jeweilige Heizung anzupassen. Die dargestellten Werte sind daher nur als Beispiel zu verstehen.

Zur Einstellung der Vorlauftemperatur wird die Außentemperatur durch einen Außentemperaturfühler 9 gemessen und über ein Kommunikationssystem 10 der Wärmeerzeugerregelung 8 zugeleitet. Bei dem Kommunikationssystem 10 kann es sich um ein Bussystem oder eine andere Kommunikationsverbindung, bspw. auch eine Punkt-zu-Punkt-Kabelverbindung, handeln. In dem dargestellten Beispiel ist das Kommunikationssystem 10 ein Bussystem, über das alle angeschlossenen Komponenten miteinander kommunizieren können, wobei die Kommunikationsverbindungen nur schematisch dargestellt sind.

Die durch die Heizkurve entsprechend Fig. 4 vorgegebene Vorlauftemperatur wird in dem Vorlauf 4 des Heizkreises des Rohrkreislaufs 3 durch einen Vorlauftemperatursensor 11 erfasst. In der Zuleitung des Rücklaufs 5 zu dem Wärmeerzeuger 2 befindet sich ein Rücklauftemperatursensor 12. Je mehr Wärme in dem Heizkreis durch den bzw. die Heizkörper 7 abgegeben wird, desto niedriger ist der Temperaturwert des Rücklauftemperatursensors 12 bei gleichbleibendem Temperaturwert des Vorlauftemperatursensors 11.

In üblichen Heizungsanlagen wird das Wärmeträgermedium durch den Wärmeerzeuger 2 auf eine Kesseltemperatur erhitzt, die über der Vorlauftemperatur des Heizkreises liegt. Diese Kesseltemperatur wird durch den Kesseltemperatursensor 13 gemessen. Die eigentliche Vorlauftemperatur im Heizkreislauf, die durch den Vorlauftemperatursensor 11 gemessen wird, wird in einem Mischer oder Regelventil 14 eingestellt, welches den Kesselvorlauf (gemessen mit dem Kesseltemperatursensor 13) mit dem Rücklauf 5 mischt, um die Vorlauftemperatur des Heizkreises aus der höheren Kesseltemperatur und der niedrigeren Rücklauftemperatur entsprechend einzustellen. Typischer Weise liegt die Kesseltemperatur, wie sie durch den Kesseltemperatursensor 13 erfasst wird, in der Größenordnung zwischen 2 bis 5 K über der Vorlauftemperatur im Vorlauf 4 des Heizkreises, wie sie durch den Vorlauftemperatursensor 11 gemessen wird.

Häufig findet sich noch eine hydraulische Weiche 15 oder ein Überstromventil in dem Wärmeerzeuger 2, um einen Mindestmassestrom innerhalb des Wärmeerzeugers, aufgrund geringer Wasserinhalte, entsprechend der Herstellervorgaben sicher zu stellen. Hintergrund ist eine Verdampfungsvermeidung am bzw. im Wärmeübertrager. Die hydraulische Weiche 15 bzw. das Überstromventil mischt Vorlauf und Rücklauf nach dem Wärmeerzeuger, insbesondere um eine zu niedrige Rücklauftemperatur ggf. anzuheben. Sowohl die hydraulische Weiche als auch das Überströmventil wirken sich dabei negativ auf die Rücklauftemperaturen aus, d.h. es kommt zu einer Anhebung des Temperaturniveaus.

Im Bereich des Wärmeerzeugers 2 befindet sich häufig auch noch eine drehzahlgeregelte Wärmeerzeugerpumpe 16, um den Kesselkreislauf zu betreiben.

An den Heizkörpern 7 befinden sich nicht dargestellte Heizkostenverteiler, welche für jeden Heizkörper 7 die von dem Heizkörper 7 abgegebene Wärmemenge pro Zeit, d.h. die abgegebene Wärmeleistung, erfassen. Hieraus lässt sich für jeden Heizkörper ein Versorgungszustand ableiten, indem die abgegebene Wärmeleistung für die jeweilige Vorlauftemperatur in Relation zu einer Nenn-Wärmeleistung gesetzt wird, die der Heizkörper 7 bei maximalem Volumenstrom abgeben kann. Dies wurde eingangs bereits grundsätzlich ausführlich erläutert. Hierfür kommen verschiedene konkrete Berechnungsmöglichkeiten in Betracht.

Aus dem Versorgungszustand für jeden einzelnen Heizkörper 7 des Heizkreises lässt sich ein (Gebäude-)Versorgungszustandswert GVZ, bspw. mittels einer Fuzzy-Logik, ermitteln, der den Gesamtversorgungszustand des Gebäudes im Hinblick auf die Wärmeversorgung beschreibt. Dieser (Gebäude-) Versorgungszustandswert GVZ wird in einem Gebäudeversorgungszustandsmodul 16 bspw. so ermittelt, wie dies eingangs bereits beschrieben wurde. Es ist bereits bekannt, einen solchen Gebäudeversorgungszustand zur adaptionsgeführten Regelung der Vorlauftemperatur zu verwenden.

Erfindungsgemäß wird dieser Gebäudeversorgungzustandswert GVZ (auch) einer erfindungsgemäßen Steuereinrichtung 17 zur Erhöhung des Nutzungsgrads des Wärmeerzeugers 2 (bspw. über das Kommunikationssystem 10) zur Verfügung gestellt.

Es ist auch möglich, das Gebäudeversorgungzustandsmodul 16 mit in die Steuereinrichtung 17 zu integrieren. In dem dargestellten Ausführungsbeispiel sind das Gebäudeversorgungzustandsmodul 16, die Steuereinrichtung 17 gemeinsam mit den beschriebenen Sensoren 9, 11, 13, 17, dem Mischer 14 zur Einstellung der Vorlauftemperatur im Heizkreis und der Wärmeleistungsregelung 8 des Wärmeerzeugers 2 sowie die Heizkreispumpe (6) an das Kommunikationsnetz 10 angeschlossen.

So hat die Steuereinrichtung 17 insbesondere Zugriff auf den Versorgungszustandswert GVZ, den durch die Heizkreispumpe 6 übermittelten Werte zum Erfassen (Messen) des Differenzdrucks *dp* sowie die durch den Rücklauftemperatursensor 12 erfasste Rücklauftemperatur $\vartheta_R$.

Unter Verwendung dieser Größen ist die Steuereinrichtung 17 erfindungsgemäß zur Durchführung des nachfolgend beschriebenen Verfahrens eingerichtet, wobei der in Fig. 2 gezeigte Regelkreis realisiert wird.

Der in Fig. 2 dargestellte Regelkreis basiert auf einer Sollwertvorgabe der Vorlauftemperatur $\vartheta_V^S(\vartheta_A)$ in Abhängigkeit von der Außentemperatur $\vartheta_A$, wie sie bspw. durch eine Heizkurve gemäß Fig. 4. Durch eine an den tatsächlichen Wärmebedarf des Gebäudes adaptierte Wärmebedarfsregelung, bspw. implementiert in der Steuereinrichtung 17, kann eine Vorlauftemperaturänderung $\Delta\vartheta_V$ vorgeben werden, die zusammen mit der außentemperaturabhängigen Sollwertvorgabe der Vorlauftemperatur $\vartheta_V^S(\vartheta_A)$ zu einem Sollwert für die Vorlauftemperatur $\vartheta_V^S$ verarbeitet und an dem Wärmeerzeuger 2 mit der Wärmeerzeugerregelung 8 weitergeleitet wird. Die Wärmeerzeugerregelung 8 erzeugt in Abhängigkeit von diesem Sollwert $\vartheta_V^S$ eine Kesseltemperatur $\vartheta_K$, welche in dem Mischer 14 entsprechend der Sollwertvorgabe $\vartheta_V^S$ zur Vorlauftemperatur $\vartheta_V$ im Heizkreis gemischt wird.

Durch die Heizkörper 7 in dem Heizkreis des Gebäudes wird Wärme abgegeben, so dass das Wärmeträgermedium sich von der Vorlauftemperatur $\vartheta_V$ auf die Rücklauftemperatur $\vartheta_R$ abkühlt, die dem Wärmeerzeuger 2 im Rücklauf 5 wieder zugeführt wird.

Für den Transport des Wärmeträgermediums in dem Rohrkreislauf 3 zu den Heizkörpern 7 ist die differenzdruckgesteuerte Heizkreispumpe 6 verantwortlich, die durch ihre Pumpleistung den für den Transport des Wärmeträgermediums verantwortlichen Differenzdruck $dp$ erzeugt, der erfindungsgemäß variiert werden kann.

Aus den Versorgungszuständen der einzelnen Heizkörper 7 wird der (Gebäude-)Versorgungszustandswert GVZ ermittelt. Die Rücklauftemperatur $\vartheta_R$ und der (Gebäude-)Versorgungszustandswert GVZ gehen als Eingangsgrößen in die Steuereinrichtung 17 ein, die daraus eine Differenzdruckänderung $\Delta dp$ ermittelt, welche auf die Heizkreispumpe 6 einwirkt und den aktuellen der Differenzdruck $dp$ verändert, um den Nutzungsgrad des Wärmeerzeugers 2 zu erhöhen.

Eine ggf. in der Steuereinrichtung 17 realisierte wärmebedarfsadaptive Anpassung der Vorlauftemperatur durch Vorgabe einer Vorlauftemperaturänderung $\Delta\vartheta_V$ ist davon unabhängig. Insbesondere kann erfindungsgemäß vorgesehen sein, dass die wärmebedarfsadaptive Anpassung der Vorlauftemperatur in der Steuereinrichtung 17 zumindest vorübergehend deaktiviert wird, um das erfindungsgemäße Verfahren zur Nutzungsgraderhöhung des Wärmeerzeugers 2 durchzuführen. Eine gleichzeitige Durchführung des erfindungsgemäßen Verfahrens und einer wärmebedarfsadaptive Anpassung der Vorlauftemperatur könnte dazu führen, dass der Nutzungsgrad des Wärmeerzeugers nicht in optimaler Weise angepasst wird. Dies ist jedoch nur optional.

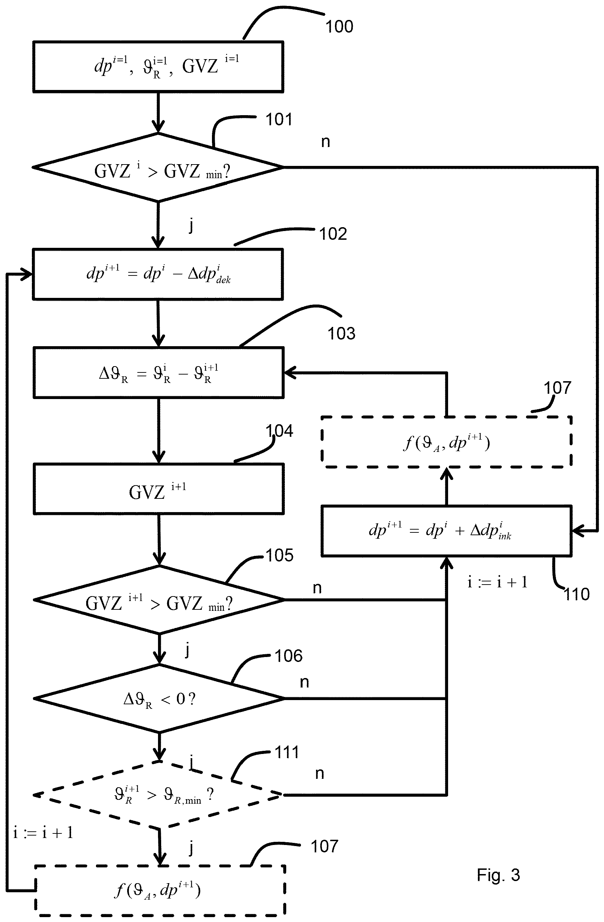

Das angewandte, erfindungsgemäße Verfahren wird nachfolgend mit Bezug auf Fig. 3 im Detail beschrieben.

Das erfindungsgemäß vorgeschlagene Verfahren beginnt gemäß einer besonders bevorzugten Ausführungsform im ersten Verfahrenszyklus mit dem Messen bzw. Ermitteln des Differenzdrucks $dp^i$ an der Heizkreispumpe 6 in dem Rohrkreislauf 3 und dem Messen der Rücklauftemperatur $\vartheta_R^i$ durch den Rücklauftemperatursensor 12 des Wärmeübertragungsmediums (auch als Heizmedium bezeichnet) in der Warmwasserheizungsanlage 1. Ferner wird durch das Gebäudeversorgungszustandsmodul 16 der Gebäudeversorgungszustand GVZ$^i$ bestimmt. Dies erfolgt im Verfahrensschritt 100. Der Index i der Variablen steht hierbei für den aktuellen Verfahrenszyklus, d.h. zu Beginn des Verfahrens ist der Index i=1. Im folgenden Text werden die Indices i um der einfacheren Lesbarkeit willen auch weggelassen.

In dem nächsten Verfahrensschritt 101 wird überprüft, ob der Versorgungszustandswert *GVZ* größer als ein minimaler Versorgungszustandswert GVZ$_{min}$ ist. Ist dies der Fall ("j"), liegt der Versorgungszustandswert *GVZ* innerhalb des vordefinierten Wertebereichs, der eine Absenkung des Differenzdrucks $dp$ erlaubt, ohne dass die Warmwasserheizungsanlage 1 einen Unterversorgungszustand aufweist.

Für den Fall, dass der Gebäudeversorgungszustand GVZ$^i$ größer als der minimale Gebäudeversorgungszustand GVZ$_{min}$ ist ("j"), wird der ermittelte Differenzdruck $dp$ in Schritt 102 um das Differenzdruckdekrement $\Delta dp_{dek}$ reduziert und eine Änderungszeitspanne abgewartet, damit sich die Auswirkungen dieser Änderungen des Differenzdrucks $dp$ in der Warmwasserheizungsanlage 1 zeigen.

In dem dann folgenden Schritt 103 wird die Auswirkung der Vorlauftemperaturänderung $\Delta\vartheta_V$ auf die Rücklauftemperatur $\vartheta_R$ ermittelt, indem nach Messen der Rücklauftemperatur $\vartheta_R$ die Rücklauftemperaturänderung $\Delta\vartheta_R$ ermittelt wird.

In einem nachfolgenden Schritt 104 wird der neue Gebäudeversorgungszustand *GVZ* nach Änderung der Vorlauftemperatur $\vartheta_V$ durch das Gebäudeversorgungszustandsmodul 16 festgestellt und in der darauf nachfolgenden Überprüfung 105 überprüft, ob der neue Gebäudeversorgungszustand *GVZ* größer als der minimale Gebäudeversorgungszustand GVZ$_{min}$ ist. Ist dies der Fall ("j"), liegt auch der neue Gebäudeversorgungszustand *GVZ* in einem Wertebereich, welcher eine weitere Absenkung Differenzdrucks $dp$ erlaubt, ohne dass die Warmwasserheizungsanlage 1 einen Unterversorgungszustand aufweist.

Für diesen Fall wird nachfolgend überprüft (Verfahrensschritt 106), ob die Rücklauftemperaturänderung $\Delta\vartheta_R$ kleiner als Null ist. Wenn dies der Fall ist, wurde durch die Absenkung Differenzdrucks $dp$ der Nutzungsgrad des Wärmeerzeugers 2 erhöht. In diesem Fall ("j") kann durch eine weitere Differenzdruckabsenkung in Höhe des Differenzdruckdekrements $\Delta dp_{dek}$ versucht werden, den Nutzungsgrad weiter zu erhöhen. Dies erfolgt durch Rückkehr zu dem Verfahrensschritt 102 in dem nachfolgenden Verfahrenszyklus i+1.

In einem optionen Verfahrenschritt 111 kann vor der Durchführung der weiteren Differenzdruckabsenkung auch noch überprüft werden, ob die Rücklauftemperatur $\vartheta_R$ größer als eine vorgegebene minimale Rücklauftemperatur $\vartheta_{R,min}$ ist. Trifft dies zu ("j"), wird wie zuvor beschrieben in den nachfolgenden Verfahrenszyklus i+1 gewechselt.

Optional kann dabei in einer Kennlinienermittlung 107 der Wert des aktuellen Differenzdrucks $dp$ zusammen mit der aktuellen Außentemperatur $\vartheta_A$ zur Kennlinienermittlung abgelegt werden. Diese Kennlinie $f(\vartheta_A, dp^{i+1})$ gibt die jeweils optimierte Differenzdruckänderung $\Delta dp$ in Abhängigkeit einer bestimmten Außentemperatur $\vartheta_A$ an. Diese Kennlinie $f(\vartheta_A, dp^{i+1})$ wird regelmäßig aktualisiert und kann so bspw. zur Ermittlung eines Startwerts herangezogen werden.

Für den Fall, dass in einem der Schritte 101 oder 105 der jeweils aktuelle (Gebäude-)Versorgungszustand *GVZ* kleiner als der minimale (Gebäude-) Versorgungszustandswert GVZ$_{min}$ ist, erfolgt in einem Verfahrensschritt 110 eine Anhebung des Differenzdrucks $dp$ um das Differenzdruckinkrement $\Delta dp_{ink}$ als Differenzdruckänderung $\Delta dp$, um die Wärmeversorgung in dem Gebäude zu erhöhen und den (Gebäude-)Versorgungszustandswert GVZ in den vordefinierten Wertebereich zurückzubringen, welcher eine Absenkung des Differenzdrucks $dp$ erlaubt, ohne dass die Heizungsanlage einen Unterversorgungszustand aufweist.

Entsprechend erfolgt bei einer negativen Prüfung in den Verfahrensschritten 105 und/oder 106 in dem Verfahrensschritt 110 eine Anhebung Differenzdrucks *dp* um das Differenzdruckinkrement $\Delta dp_{ink}$ als Differenzdruckänderung $\Delta dp$, weil die zuvor erfolgte Differenzdruckabsenkung $\Delta dp$ offensichtlich zu einem ungewünschten Ergebnis geführt hat. Entweder war die Rücklauftemperaturänderung $\Delta \vartheta_R$ größer als Null, was auf einen schlechteren Wirkungsgrad für den Wärmeerzeuger hindeutet, oder die Rücklauftemperatur $\vartheta_R$ ist unter die vorgegebene minimale Rücklauftemperatur $\vartheta_{R,min}$ gefallen, was bspw. aufgrund einer Vorgabe durch den Hersteller einen ungewünschten Betriebszustand für den Wärmeerzeuger anzeigt. Dies wird durch eine Anhebung Differenzdrucks *dp* wieder korrigiert.

Auch im Falle einer Differenzdruckerhöhung $\Delta dp$ kann eine Kennlinienfassung 107 stattfinden, welche die Außentemperatur $\vartheta_A$ in Relation zu dem aktuellen Differenzdruck *dp* setzt. Diese Kennlinie $f(\vartheta A, dp^{i+1})$ kann als Startwert des Verfahrens nach einer Wiederinbetriebnahme der Heizungsanlage 1 verwendet werden.

Das Differenzdruckdekrement $\Delta dp_{dek}$ kann zur Gewährleistung einesr minimalen Differenzdrucks $dp_{min}$ so gewählt werden, dass das Differenzdruckdekrement $\Delta dp_{dek}$ proportional zur Differenz des aktuellen Differenzdrucks *dp* und dem minimalen Differenzdruck $dp_{min}$ gewählt wird, der im Falle eines Heizbetriebs nicht unterschritten werden sollte. Die Ermittlung des Differenzdruckdekrements $\Delta dp_{dek}$ nach dieser optionalen Ausführungsform kann also entsprechend der nachfolgend wiedergegebenen Gleichung erfolgen:

$$\Delta dp_{dek} = (dp^i - dp_{min}) \cdot Param$$

Die Proportionalitätskonstante *Param* kann frei wählbar sein und bspw. den Wert 0,05 aufweisen, so dass das Differenzdruckdekrement $\Delta dp_{dek}$ jeweils 5% des Abstands des aktuellen Differenzdrucks *dp* zu dem vordefinierten bzw. vorgegebenen minimalen Differenzdruck $dp_{min}$ aufweist, die unbedingt eingehalten werden soll. Hierdurch wird ein Unterschreiten des minimalen Differenzdrucks $dp_{min}$ vermieden. In ähnlicher Weise kann, wie bereits beschrieben, ein Differenzdruckinkrement $\Delta dp_{ink}$ definiert werden.

Im Rahmen der Ermittlung des Differenzdrucks $dp^i$, der Rücklauftemperatur $\vartheta_R^i$ und des (Gebäude-)Versorgungszustandswerts $GVZ^i$ in Verfahrensschritt 100 kann optional zusätzlich überprüft werden, ob sich der Wärmeerzeuger 2 überhaupt im Heizbetrieb befindet. Als Kriterium kann hierfür überprüft werden, ob eine gemessene Vorlauftemperatur $\vartheta_V^i$ größer als die minimale Vorlauftemperatur $\vartheta_{V,min}$ ist und/oder ob der gemessene Differenzdruck $dp^i$ größer als der minimale Differenzdruck $dp_{min}$ ist. Diese minimale Vorlauftemperatur $\vartheta_{V,min}$ kann bspw. bei 35°C liegen. Eine höhere Vorlauftemperatur zeigt dann zuverlässig einen Heizbetrieb an. Alternativ kann der Differenzdruck *dp* (entsprechend der Förderhöhe der Heizungsumwälzpumpe bzw. Hiezkreispumpe 6) gemessen (bspw, durch Auslesen aus der Heizkreispumpe 6) werden. Diese muss größer Null bzw. größer als ein Minimalwert $dp_{min}$ (minimaler Differenzdrucks $dp_{min}$) sein. Ein geeigneter Grenzwert für den Differenzdruck $dp_{min}$ ist bspw. für DN 15 - 20: (5 ... 25) kPa und für DN 32 - 40: (10 ... 40) kPa.

Das vorstehend beschriebene Verfahren zur Erhöhung des Nutzungsgrads des Wärmeerzeugers findet im Falle einer solchen (optionalen) Überprüfung nur statt, wenn überhaupt ein Heizbetrieb vorliegt. Unter dem Heizbetrieb wird dabei insbesondere eine Betriebsart ohne Trinkwassererwärmung verstanden. Beim Betrieb des Brenners nur zur Trinkwassererwärmung ist das erfindungsgemäße Verfahren meist nicht geeignet, den Nutzungsgrad des Wärmeerzeugers zu erhöhen.

Im Rahmen der Kennlinienermittlung 107 kann zu Überprüfungszwecken ergänzend vorgesehen sein, den tatsächlichen Nutzungsgrad $\beta$ des Wärmeerzeugers 2 bezogen auf die Raumheizwärme für das aktuelle Zeitintervall zu bestimmen. Der Nutzungsgrad $\beta$ ist definiert als das Verhältnis der abgegebenen Wärmemenge Q des Wärmeerzeugers 2 für die Raumheizung dividiert durch die eingesetzte Endenergie E. Die abgegebene Wärmemenge Q kann bspw. durch einen Wärmemengenzähler 18 (vgl. Fig. 1) ermittelt werden, welcher die Kesseltemperatur $\vartheta_K$, die Rücklauftemperatur $\vartheta_R$ und den Volumenstrom durch den Rohrkreislauf 3 erfasst. Hieraus kann die pro Zeitintervall abgegebene Wärmemenge Q in bekannter Weise berechnet werden. Die Endenergie E kann durch einen Endenergiezähler 19, bspw. einen Gaszähler, einen Elektroenergiezähler, einen Volumenmesszähler für Öl oder verbrauchte Pellets oder dergleichen ermittelt werden. Ein solcher Endenergiezähler 19 kann in den Eintrag der zugeführten Endenergie E integriert sein.

Sowohl der Wärmemengenzähler 18 als auch der Endenergiezähler 19 kann so eingerichtet sein, dass sie die gemessene Energie jeweils in Kilowattstunden (kWh) angeben, so dass diese Größen unmittelbar vergleichbar sind.

Hierdurch ist es möglich, die durch das erfindungsgemäß vorgeschlagene Verfahren ermittelte Optimierung des Nutzungsgrads $\beta$ anhand von Messgrößen tatsächlich zu überprüfen.

Es wird jedoch ausdrücklich darauf hingewiesen, dass die Ermittlung des Nutzungsgrads $\beta$ des Wärmeerzeugers 2 nicht Teil des eigentlichen Optimierungsverfahrens sein muss, das ausschließlich mit den Messgrößen Gebäudeversorgungszustandswert GVZ, Differenzdruck *dp* und Rücklauftemperatur $\vartheta_R$ auskommt, um den Nutzungsgrad $\beta$ des Wärmeerzeugers 2 zu optimieren. Hierin liegt gerade der Vorteil des erfindungsgemäß vorgeschlagenen Verfahrens sowie der zur Durchführung des Verfahrens eingerichteten Steuereinrichtung 17.

**Bezugszeichenliste:**

1   (Warmwasser-)Heizungsanlage
2   Wärmeerzeuger
3   Rohrkreislauf
4   Vorlauf
5   Rücklauf
6   drehzahl- oder differenzdruckgeregelte Heizkreispumpe
7   als Heizkörper ausgebildeter Wärmeverbraucher
8   Wärmeerzeuger- oder Heizungsregelung
9   Außentemperatursensor
10  Kommunikationssystem
11  Vorlauftemperatursensor
12  Rücklauftemperatursensor
13  Kesseltemperatursensor
14  Mischer
15  Hydraulische Weiche
16  Gebäudeversorgungszustandsmodul
17  Steuereinrichtung
18  Wärmemengenzähler
19  Endenergiezähler

E     zugeführte Endenergie
Q     abgegebene Wärme
$\dot{Q}$     Wärmeleistung (thermische Leistung)
GVZ   (Gebäude-)Versorgungszustandswert

**Patentansprüche**

1.  Verfahren zur Erhöhung des Nutzungsgrads eines Wärmeerzeugers (2) in einer Heizungsanlage (1), welcher aus Endenergie (E) Wärme erzeugt und ein in einem Rohrkreislauf (3) aus Vorlauf (4) und Rücklauf (5) der Heizungsanlage (1) zirkulierendes Wärmeübertragungsmedium erwärmt, bei dem die folgenden Verfahrensschritte durchgeführt werden:

    (a) Messen der Rücklauftemperatur ($\vartheta_R$) des Wärmeübertragungsmediums und des Differenzdrucks *(dp)* einer Heizkreispumpe (6) in der Heizungsanlage (1);
    (b1) Bestimmen eines Versorgungszustandswerts (GVZ), welcher den durch die Heizungsanlage (1) zu deckenden Wärmebedarf der an den Rohrkreislauf (3) der Heizungsanlage (1) angeschlossenen Wärmeverbraucher (7) anzeigt,

    **gekennzeichnet durch** die folgenden Verfahrensschritte:

    (b2) Überprüfen, ob der Versorgungszustandswert (GVZ) innerhalb eines vordefinierten Wertebereichs liegt, welcher eine Absenkung des Differenzdrucks *(dp)* erlaubt, ohne dass die Heizungsanlage (1) einen Unterversorgungszustand aufweist;
    (c) Absenken des Differenzdrucks *(dp)* um ein vorbestimmtes Differenzdruckdekrement ($\Delta dp_{dek}$) und Abwarten einer Änderungszeitspanne, welche derart bemessen ist, dass das Ändern des Differenzdrucks *(dp)* Auswirkungen in der Heizungsanlage (1) zeigt;
    (d) Messen der Rücklauftemperatur ($\vartheta_R$) und Bestimmen der Rücklauftemperaturänderung ($\Delta\vartheta_R$) nach der Änderung des Differenzdrucks *(dp)*;
    (e) Bestimmen eines Versorgungszustandswerts (GVZ) nach der Änderung des Differenzdrucks *(dp)*;

(f) Überprüfen, ob die Rücklauftemperaturänderung ($\Delta\vartheta_R$) kleiner Null ist und ob der Versorgungszustandswert (GVZ) innerhalb des vordefinierten Wertebereichs liegt, wobei das Verfahren in diesem Fall mit dem Verfahrensschritt (c) fortgesetzt wird;

(g) Überprüfen, ob die Rücklauftemperaturänderung ($\Delta\vartheta_R$) größer Null ist, wobei in diesem Fall der Differenzdruck *(dp)* um ein Differenzdruckinkrement ($\Delta dp_{ink}$) angehoben wird, eine Änderungszeitspanne abgewartet wird und das Verfahren mit dem Verfahrensschritt (d) fortgesetzt wird;

(h) Überprüfen, ob der Versorgungszustandswert (GVZ) außerhalb des vordefinierten Wertebereichs liegt, wobei in diesem Fall der Differenzdruck *(dp)* um ein Differenzdruckinkrement ($\Delta dp_{ink}$) angehoben wird, eine Änderungszeitspanne abgewartet wird und das Verfahren mit dem Verfahrensschritt (d) fortgesetzt wird.

2. Verfahren nach Anspruch 1, **dadurch gekennzeichnet, dass** in einem zusätzlichen Verfahrensschritt (i) überprüft wird, ob die Rücklauftemperatur ($\vartheta_R$) größer als eine vorgegebene minimale Rücklauftemperatur ($\vartheta_{R,min}$) ist, wobei der Differenzdruck *(dp)* um ein Differenzdruckinkrement ($\Delta dp_{ink}$) angehoben wird, eine Änderungszeitspanne abgewartet wird und das Verfahren mit dem Verfahrensschritt (d) fortgesetzt wird, wenn die Rücklauftemperatur ($\vartheta_R$) kleiner als die vorgegebene minimale Rücklauftemperatur ($\vartheta_{R,min}$) ist.

3. Verfahren nach Anspruch 1 oder 2, **dadurch gekennzeichnet, dass** die Verfahrensschritte während des Heizbetriebs der Heizungsanlage (1) durchgeführt werden.

4. Verfahren nach Anspruch der vorhergehenden Ansprüche, **dadurch gekennzeichnet, dass** das Differenzdruckdekrement ($\Delta dp_{dek}$) und/oder das Differenzdruckinkrement ($\Delta dp_{ink}$) aus dem aktuellen der Differenzdruck *(dp)* und einem in der Heizungsanlage vorgegebenen minimalen Differenzdruck ($dp_{min}$) berechnet wird.

5. Verfahren nach einem der vorhergehenden Ansprüche, **dadurch gekennzeichnet, dass** das Differenzdruckinkrement ($\Delta dp_{ink}$) und/oder das Differenzdruckdekrement ($\Delta dp_{dek}$) in Abhängigkeit von dem Versorgungszustandswert (GVZ) ermittelt wird.

6. Verfahren nach einem der vorhergehenden Ansprüche, **dadurch gekennzeichnet, dass** der Versorgungszustandswert (GVZ) aus Versorgungszuständen von in dem Rohrkreislauf (3) der Heizungsanlage (1) angeordneten Wärmeverbrauchern (7) ermittelt wird, wobei der Versorgungszustand eines Wärmeverbrauchers (7) den zusätzlichen positiven oder negativen Wärmebedarf des Wärmeverbrauchers (7) anzeigt und mit dem Volumenstrom und/oder Temperaturen des den Wärmeverbraucher (7) durchströmenden Wärmeübertragungsmediums über Kennlinien korreliert ist.

7. Verfahren nach Anspruch 6, **dadurch gekennzeichnet, dass** der Versorgungszustand eines als Heizkörper ausgebildeten Wärmeverbrauchers (7) aus Heizkörper-Temperaturwerten mittels Kennlinien ermittelt wird, wobei die Heizkörper-Temperaturwerte durch einem an der Oberfläche des Heizkörpers angebrachten Heizkostenverteiler gemessen werden.

8. Verfahren nach einem der vorhergehenden Ansprüche, **dadurch gekennzeichnet, dass** nach dem Abwarten einer Änderungszeitspanne der Nutzungsgrad des Wärmeerzeugers bezogen auf die abgegebene Wärmemenge (Q) des Wärmeerzeugers (2) durch die Wärmeverbraucher (7) für ein gewähltes Zeitintervall bestimmt wird, indem der Quotient aus der durch alle Wärmeerzeuger (7) in dem Rohrkreislauf (3) der Heizungsanlage (1) abgegebenen Wärmemenge (Q) und der dafür aufgewendeten Endenergie (E) gebildet wird.

9. Verfahren nach einem der vorhergehenden Ansprüche, **dadurch gekennzeichnet, dass** während des Betriebs eine bezüglich des Nutzungsgrads des Wärmeerzeugers (2) optimierte Differenzdruckeinstellung dann festgestellt wird, wenn in zwei aufeinander folgenden Verfahrenszyklen ein Wechsel zwischen einer positiven und einer negativen Rücklauftemperaturänderung ($\Delta\vartheta_R$) oder ein Wechsel von einem Versorgungszustandswert (GVZ) außerhalb des vordefinierten Wertebereichs zu einem Versorgungszustandswert (GVZ) innerhalb des vordefinierten Wertebereichs stattfindet, und dass der Differenzdruck *(dp)* der optimierten Differenzdruckeinstellung in Abhängigkeit von der Außentemperatur ($\vartheta_A$) und der Tageszeit in einer Wertetabelle abgelegt wird.

10. Steuereinrichtung zur Erhöhung des Nutzungsgrads eines Wärmeerzeugers (2) in einer Heizungsanlage (1) mit einer Recheneinheit, einem Anschluss zum Messen der Rücklauftemperatur ($\vartheta_R$) eines Heizmediums und des Differenzdrucks *(dp)* einer Heizkreispumpe (6) in der Heizungsanlage (1), einem Anschluss zum Bestimmen eines Versorgungszustandswerts (GVZ) und einem Anschluss an die Wärmeerzeugerregelung (8) zur Vorgabe eines durch den Wärmeerzeuger (2) in der Heizungsanlage (1) einzustellenden Differenzdrucks *(dp)*, **dadurch gekenn-**

zeichnet, dass die Recheneinheit zur Durchführung des Verfahrens nach einem der Ansprüche 1 bis 9 eingerichtet ist.

11. Steuereinrichtung nach Anspruch 10, **dadurch gekennzeichnet, dass** die Steuereinrichtung (17) einen Anschluss an einen Zähler (19) zur Erfassung der durch den Wärmeerzeuger (2) verbrauchten Endenergie (E) aufweist.

**Claims**

1. A method for increasing the performance ratio of a heat generator (2) in a heating installation (1), which generates heat from final energy (E) and heats a heat transfer medium circulating in a pipe circuit (3) comprising flow (4) and return flow (5) of the heating installation (1), wherein the following method steps are carried out:

   (a) measuring the return flow temperature ($\vartheta_R$) of the heat transfer medium and the differential pressure *(dp)* of a heating circuit pump (6) in the heating installation (1);
   (b1) determining a supply state value (GVZ) which indicates the heat requirement of the heat consumers (7) connected to the pipe circuit (3) of the heating installation (1), which heat requirement is to be covered by the heating installation (1),

   **characterized by** the following method steps:

   (b2) checking whether the supply state value (GVZ) lies within a predefined value range which permits lowering the differential pressure *(dp)* without the heating installation (1) having a supply shortage state;
   (c) lowering the differential pressure *(dp)* by a predetermined differential pressure decrement ($\Delta dp_{dek}$) and waiting for a change period which is dimensioned such that changing the differential pressure *(dp)* has effects in the heating installation (1);
   (d) measuring the return flow temperature ($\vartheta_R$) and determining the return flow temperature change ($\Delta\vartheta_R$) after the change of the differential pressure *(dp)*;
   (e) determining a supply state value (GVZ) after the change of the differential pressure *(dp)*;
   (f) checking whether the return flow temperature change ($\Delta\vartheta_R$) is less than zero and whether the supply state value (GVZ) is within the predefined value range, wherein in this case, the method is continued with method step (c);
   (g) checking whether the return flow temperature change ($\Delta\vartheta_R$) is greater than zero, wherein in this case, the differential pressure *(dp)* is increased by a differential pressure increment ($\Delta dp_{ink}$), a change period is waited for and the method is continued with method step (d);
   (h) checking whether the supply state value (GVZ) is outside the predefined value range, wherein in this case, the differential pressure *(dp)* is increased by a differential pressure increment ($\Delta dp_{ink}$), a change period is waited for and the method is continued with the method step (d).

2. The method according to claim 1, **characterized in that** in an additional method step (i) it is checked whether the return flow temperature ($\vartheta_R$) is greater than a predetermined minimum return flow temperature ($\vartheta_{R,min}$), wherein the differential pressure *(dp)* is increased by a differential pressure increment *($\Delta dp_{ink}$)*, a change period is waited for and the method is continued with method step (d) if the return flow temperature ($\vartheta_R$) is less than the predetermined minimum return flow temperature ($\vartheta_{R,min}$).

3. The method according claim 1 or 2, **characterized in that** the method steps are performed during the heating operation of the heating installation (1).

4. The method according to any one of the preceding claims, **characterized in that** the differential pressure decrement ($\Delta dp_{dex}$) and/or the differential pressure increment ($\Delta dp_{ink}$) is calculated from the current differential pressure *(dp)* and a minimum differential pressure ($dp_{min}$) predetermined in the heating installation.

5. The method according to any one of the preceding claims, **characterized in that** the differential pressure increment ($\Delta dp_{ink}$) and/or the differential pressure decrement ($\Delta dp_{dex}$) are/is determined as a function of the supply state value (GVZ).

6. The method according to any one of the preceding claims, **characterized in that** the supply state value (GVZ) is determined from supply states of heat consumers (7) arranged in the pipe circuit (3) of the heating installation (1), wherein the supply state of a heat consumer (7) indicates the additional positive or negative heat requirement of the heat consumer (7) and is correlated via characteristic curves with the volume flow and/or temperatures of the heat transfer medium flowing through the heat consumer (7).

7. The method according to claim 6, **characterized in that** the supply state of a heat consumer (7) designed as a radiator is determined from radiator temperature values by means of characteristic curves, wherein the radiator temperature values are measured by a heat cost allocator mounted on the surface of the radiator.

8. The method according to one of the preceding claims, **characterized in that**, after waiting for a change period of time, the performance ratio of the heat generator in relation to the quantity of heat (Q) delivered by the heat generator (2) is determined by the heat consumers (7) for a selected time interval **in that** the quotient is calculated from the quantity of heat (Q) delivered by all the heat generators (7) in the pipe circuit (3) of the heating installation (1) and the final energy (E) used for this purpose.

9. The method according to any one of the preceding claims, **characterized in that** during operation a differential pressure setting which is optimized with respect to the performance ratio of the heat generator (2) is determined, when in two successive process cycles, a change between a positive and a negative return flow temperature change $(\Delta\vartheta_R)$ or a change from a supply state value (GVZ) outside the predefined value range to a supply state value (GVZ) within the predefined value range takes place, and **in that** the differential pressure (*dp*) of the optimized differential pressure setting is stored in a value table as a function of the outside temperature $(\vartheta_A)$ and the time of day.

10. A control device for increasing the performance ratio of a heat generator (2) in a heating installation (1), comprising a computing unit, a connection for measuring the return flow temperature $(\vartheta_R)$ of a heating medium and the differential pressure (*dp*) of a heating circuit pump (6) in the heating installation (1), a connection for determining a supply state value (GVZ) and a connection to the heat generator controller (8) for specifying a differential pressure (*dp*) to be set by the heat generator (2) in the heating installation (1), **characterized in that** the computing unit is configured to carry out the method according to any one of claims 1 to 9.

11. The control device according to claim 10, **characterized in that** the control device (17) has a connection to a counter (19) for detecting the final energy (E) consumed by the heat generator (2).

## Revendications

1. Procédé pour augmenter le facteur d'utilisation d'un générateur de chaleur (2) dans une installation de chauffage (1), lequel génère de la chaleur à partir d'énergie finale (E) et chauffe un fluide caloporteur circulant dans un circuit de tuyauterie (3) à base d'une canalisation montante (4) d'une canalisation de retour (5) de l'installation de chauffage (1), dans lequel les étapes suivantes du procédé sont réalisées :

(a) la mesure de la température de retour $(\vartheta_R)$ du fluide caloporteur et de la pression différentielle (*dp*) d'une pompe de circuit de chauffage (6) dans une installation de chauffage (1) ;
(b1) la détermination d'une valeur d'état d'alimentation (GVZ), laquelle indique le besoin en chaleur à satisfaire par l'installation de chauffage (1) des consommateurs de chaleur (7) raccordés au circuit de tuyauterie (3) de l'installation de chauffage (1),

**caractérisé par** les étapes suivantes du procédé :

(b2) la vérification si la valeur d'état d'alimentation (GVZ) se situe dans les limites d'une plage de valeurs prédéfinie, laquelle autorise un abaissement de la pression différentielle (*dp*) sans que l'installation de chauffage (1) présente un état de sous-alimentation ;
(c) l'abaissement de la pression différentielle (*dp*) de l'ordre d'un décrément de pression différentielle $(\Delta dp_{dek})$ et l'attente pendant un laps de temps de modification dimensionné de telle sorte que la modification de la pression différentielle (*dp*) présente des effets dans l'installation de chauffage (1) ;
(d) la mesure de la température de retour $(\vartheta_R)$ et la détermination de la variation de température de retour $(\Delta\vartheta_R)$ après la modification de la pression différentielle (*dp*) ;
(e) la détermination d'une valeur d'état d'alimentation (GVZ) après la modification de la pression différentielle (*dp*) ;
(f) la vérification si la variation de température de retour $(\Delta\vartheta_R)$ est inférieure à zéro et si la valeur d'état d'alimentation (GVZ) se situe dans les limites de la plage de valeurs prédéfinie, dans lequel, dans ce cas, le procédé se poursuit avec l'étape (c) du procédé ;

(g) la vérification si la variation de température de retour ($\Delta\vartheta_R$) est supérieure à zéro, dans lequel, dans ce cas, la pression différentielle ($dp$) est élevée de l'ordre d'un incrément de pression différentielle ($\Delta dp_{ink}$), on attend pendant un laps de temps de modification, et le procédé se poursuit avec l'étape (d) du procédé ;

(h) la vérification si la valeur d'état d'alimentation (GVZ) se situe en-dehors de la plage de valeurs prédéfinie, dans lequel, dans ce cas, la pression différentielle ($dp$) est élevée de l'ordre d'un incrément de pression différentielle ($\Delta dp_{ink}$), on attend pendant un laps de temps de modification, et le procédé se poursuit avec l'étape (d) du procédé.

2. Procédé selon la revendication 1, **caractérisé en ce que**, dans une étape supplémentaire (i) du procédé, on vérifie si la température de retour ($\vartheta_R$) est supérieure à une température de retour minimale prescrite ($\vartheta_{R,min}$), dans lequel la pression différentielle ($dp$) est élevée de l'ordre d'un incrément de pression différentielle ($\Delta dp_{ink}$), on attend pendant un laps de temps de modification, et le procédé se poursuit avec l'étape de procédé (d) si la température de retour ($\vartheta_R$) est inférieure à la température de retour minimale prescrite ($\vartheta_{R,min}$).

3. Procédé selon la revendication 1 ou 2, **caractérisé en ce que** les étapes du procédé sont exécutées pendant le fonctionnement de chauffage de l'installation de chauffage (1).

4. Procédé selon la revendication des revendications précédentes, **caractérisé en ce que** le décrément de pression différentielle ($\Delta dp_{dek}$) et/ou l'incrément de pression différentielle ($\Delta dp_{ink}$) est calculé à partir de la pression différentielle actuelle ($dp$) et d'une pression différentielle minimale prescrite ($dp_{min}$) dans l'installation de chauffage.

5. Procédé selon l'une des revendications précédentes, **caractérisé en ce que** l'incrément de pression différentielle ($\Delta dp_{ink}$) et/ou le décrément de pression différentielle ($\Delta dp_{dek}$) est déterminé en fonction de la valeur d'état d'alimentation (GVZ).

6. Procédé selon l'une des revendications précédentes, **caractérisé en ce que** la valeur d'état d'alimentation (GVZ) est déterminée à partir d'états d'alimentation de consommateurs de chaleur (7) disposés dans le circuit de tuyauterie (3) de l'installation de chauffage (1), dans lequel l'état d'alimentation d'un consommateur de chaleur (7) indique le besoin en chaleur positif ou négatif supplémentaire du consommateur de chaleur (7) et est mis en corrélation avec le débit volumétrique et/ou des températures du fluide caloporteur s'écoulant à travers le consommateur de chaleur (7) via des courbes caractéristiques.

7. Procédé selon la revendication 6, **caractérisé en ce que** l'état d'alimentation d'un consommateur de chaleur (7) réalisé en tant que radiateur est déterminé à partir de valeurs de température de radiateur au moyen de courbes caractéristiques, dans lequel les valeurs de température de radiateur sont mesurées par des répartiteurs de frais de chauffage montés sur la surface du radiateur.

8. Procédé selon l'une des revendications précédentes, **caractérisé en ce qu'**après avoir attendu pendant un laps de temps de modification, on détermine le facteur d'utilisation du générateur de chaleur concernant la quantité de chaleur (Q) dégagée du générateur de chaleur (2) à travers les consommateurs de chaleur (7) pour un intervalle de temps sélectionné en formant le quotient de la quantité de chaleur (Q) dégagée par tous les générateurs de chaleur (7) dans le circuit de tuyauterie (3) de l'installation de chauffage (1) et l'énergie finale (E) utilisée à cet effet.

9. Procédé selon l'une des revendications précédentes, **caractérisé en ce que**, pendant le fonctionnement, on constate un réglage de pression différentielle optimisé concernant le facteur d'utilisation du générateur de chaleur (2) lorsque dans deux cycles du procédé qui se suivent, un changement a lieu entre une variation de température de retour ($\Delta\vartheta_R$) positive et négative ou un changement d'une valeur d'état d'alimentation (GVZ) en-dehors de la plage de valeurs prédéfinie à une valeur d'état d'alimentation (GVZ) dans les limites de la plage de valeurs prédéfinie, et que la pression différentielle ($dp$) du réglage de pression différentielle optimisé en fonction de la température extérieure ($\vartheta_A$) et du moment du jour est déposé dans une table des valeurs.

10. Dispositif de commande pour augmenter le facteur d'utilisation d'un générateur de chaleur (2) dans une installation de chauffage (1) avec une unité de calcul, un raccordement pour mesurer la température de retour ($\vartheta_R$) d'un fluide de chauffage et la pression différentielle ($dp$) d'un circuit de tuyauterie (6) dans l'installation de chauffage (1), un raccordement pour déterminer une valeur d'état d'alimentation (GVZ) et un raccordement au dispositif de réglage de générateur de chaleur (8) pour prescrire une pression différentielle ($dp$) à régler par le générateur de chaleur (2) dans l'installation de chauffage (1), **caractérisé en ce que** l'unité de calcul est étudiée pour la mise en oeuvre du procédé selon l'une des revendications 1 à 9.

11. Dispositif de commande selon la revendication 10, **caractérisé en ce que** le dispositif de commande (17) présente un raccordement à un compteur (19) pour la détection de l'énergie finale (E) consommée par le générateur de chaleur (2).

Fig. 1

Fig. 2

EP 3 220 065 B1

Fig. 3

Fig. 4

Fig. 5

Fig. 6

Fig. 7

Fig. 8

**IN DER BESCHREIBUNG AUFGEFÜHRTE DOKUMENTE**

**In der Beschreibung aufgeführte Patentdokumente**

- DE 202014103748 U1
- EP 1108962 A2
- EP 1752852 A
- EP 1456727 B1
- EP 1933220 B1
- EP 1645928 B1
- EP 2009536 B1